(19) **Europäisches Patentamt**
**European Patent Office**
**Office européen des brevets**

(11) **EP 2 981 083 A1**

(12) **EUROPEAN PATENT APPLICATION**
published in accordance with Art. 153(4) EPC

(43) Date of publication:
**03.02.2016 Bulletin 2016/05**

(51) Int Cl.:
**H04N 19/102** *(2014.01)*　　**H04N 19/597** *(2014.01)*

(21) Application number: **14775632.4**

(22) Date of filing: **12.03.2014**

(86) International application number:
**PCT/JP2014/056484**

(87) International publication number:
**WO 2014/156648 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.03.2013　JP 2013066314**

(71) Applicant: **National Institute of Information and Communication Technology**
**Tokyo 184-8795 (JP)**

(72) Inventors:
• **PANAHPOUR TEHRANI, Mehrdad**
**Koganei-shi**
**Tokyo 184-8795 (JP)**

• **ISHIKAWA, Akio**
**Koganei-shi**
**Tokyo 184-8795 (JP)**
• **KAWAKITA, Masahiro**
**Koganei-shi**
**Tokyo 184-8795 (JP)**
• **INOUE, Naomi**
**Koganei-shi**
**Tokyo 184-8795 (JP)**
• **FUJII, Toshiaki**
**Nagoya-shi**
**Aichi 464-8601 (JP)**

(74) Representative: **Kuhnen & Wacker**
**Patent- und Rechtsanwaltsbüro**
**Prinz-Ludwig-Straße 40A**
**85354 Freising (DE)**

(54) **METHOD FOR ENCODING A PLURALITY OF INPUT IMAGES AND STORAGE MEDIUM AND DEVICE FOR STORING PROGRAM**

(57)　A method for encoding a plurality of input images is provided. The method includes the steps of generating a first residual image from a difference between a first input image and a corresponding first predicted image, converting, into a remainder, a pixel value included in a region of the first residual image which should be defined by a remainder, generating a second residual image from a difference between a second input image and a corresponding second predicted image, converting, into a remainder, the pixel value included in a region of the second residual image which should be defined by a remainder, and coding the first residual image after the conversion, the second residual image after the conversion, and additional information specifying the region which should be defined by a remainder in each of the first residual image and the second residual image.

FIG.6

EP 2 981 083 A1

**Description**

TECHNICAL FIELD

The present invention relates to a method for encoding a plurality of input images of different types containing different pieces of information on an object, respectively, and a storage medium having a program stored thereon and an apparatus.

BACKGROUND ART

There is a conventionally known video coding (video coding) technique in which redundancy between frames is taken into consideration for a moving picture composed of a sequence of frames located in the time domain (see, e.g., NPD 1). With a typical video coding technique, P frames (predicted frames) and/or B frames (bi-directional predicted frames) are transmitted instead of an original image as input. The P frame is a frame calculated by forward prediction, and the B frame is a frame calculated by any one of forward prediction, backward prediction and bi-directional prediction.
NPD 2 discloses a method for extending and applying such a video coding technique to the time domain and the spatial domain. That is, according to the teaching of NPD 2, P frames and/or B frames can be generated for a plurality of frames located in the time domain and the spatial domain.
Examples of a sequence of frames located in the spatial domain can include a sequence of frames used for a 3D display technology for providing high-definition 3D displays using multi-view video. Such 3D displays are achieved by multi-view video obtained by capturing images of an object from a large number of views (e.g., 200 views). By means of view interpolation, such as generating P frames and/or B frames using 3D information such as a distance map, a technique similar to encoding on a sequence of frames located in the time domain is also applicable to a sequence of frames located in the spatial domain.
NPD 3 discloses a technique for encoding of multi-view video. NPD 3 discloses a technique for generating P frames and/or B frames from 3D information, such as depth maps, using view interpolation not only in the time domain but also in the spatial domain.
It is noted that, throughout the present specification, compressing (converting) data into codes depending on the purpose will be described as encoding, and inverting (decrypting) the converted codes to original data will be described as decoding. The term coding shall refer to encoding alone as well as both of encoding and decoding.

CITATION LIST

NON PATENT DOCUMENT

NPD 1: Thomas Wiegand, Gary J. Sullivan, Gisle Bjontegaard, and Ajay Luthra, "Overview of the H.264/AVC Video Coding Standard", IEEE Transactions on Circuits and Systems for Video Technology, Vol. 13, No.7, pp. 560-576, July 2003
NPD 2: P. Merkle, K. Muller, A. Smolic, and. T. Wiegand, "Efficient Compression of Multi-view Video Exploiting inter-view dependencies based on H.264/MPEG4-AVC," Proc. ICME 2006, pp. 1717-1720
NPD 3: S. Yea, A. Vetro, "View synthesis prediction for multiview video coding", Signal Processing: Image Communication 24 (2009) pp. 89-100.

SUMMARY OF INVENTION

TECHNICAL PROBLEM

According to the techniques disclosed in NPD 1 to NPD 3, P frames and B frame as generated are transmitted in the form of residual values. Here, data compression is further executed on information on residual values. In this data compression, image transformation (typically, discrete cosine transform), quantization, entropy coding, and the like are executed. In the case of high data compression rate, execution of quantization causes significant data loss because of reduction of data size. That is, information on residual values of small magnitude is lost in the data compression.
On the other hand, some image features, such as edge information and boundary information, should be protected even if the data compression rate is increased.
An encoding technique for maintaining the balance between compression efficiency and compression quality for a plurality of input images of different types containing different pieces of information on an object, respectively, is required.

SOLUTION TO PROBLEM

According to an aspect of the present invention, a method for encoding a plurality of input images is provided. The method includes the steps of obtaining a plurality of first input images each containing first information on an object and a plurality of second input images each containing second information on the object, the plurality of second input images corresponding to the plurality of first input images, respectively, the second information being different from the first information, for one of the first input images, calculating a first predicted image from information contained in at least one of another one of the first input images and a corresponding one of the second input images, generating a first residual image from a difference between the one of the first input images and the corresponding first predicted image, specifying a region whose pixel value should be defined by a remainder, among pixels constituting the first residual image, based on a pixel value of the first residual image, converting, into a remainder, the pixel value included in the specified region of the first residual image which should be defined by a remainder, for one of the second input images, calculating a second predicted image from information contained in at least one of another one of the second input images and a corresponding one of the first input images, generating a second residual image from a difference between the one of the second input images and the corresponding second predicted image, specifying a region whose pixel value should be defined by a remainder, among pixels constituting the second residual image, based on a pixel value of the second residual image, converting, into a remainder, the pixel value included in the specified region of the second residual image which should be defined by a remainder, and encoding the first residual image after the conversion, the second residual image after the conversion, and additional information specifying the region which should be defined by a remainder in each of the first residual image and the second residual image.

Preferably, the step of converting into a remainder includes steps of executing a modulo operation on the pixel value for the region which should be defined by a remainder, obtaining gradient information on the predicted images, and with reference to a predetermined correspondence between a gradient and a value for use as a modulus in the modulo operation, determining the value for use as a modulus in the modulo operation based on the obtained gradient information.

Preferably, the step of calculating a first predicted image includes a step of calculating the first predicted image using one of the second input images corresponding to one of the first input images which is a target of calculation and one or more previous first input images.

Alternatively, preferably, the step of calculating a second predicted image includes a step of calculating the second predicted image using motion data on one of the first input images corresponding to one of the second input images which is a target of calculation, and the motion data on the one of the first input images indicates a change component between a previous first input image and the one of the first input images which is a target of calculation.

Preferably, the step of calculating a second predicted image includes a step of calculating the second predicted image using one of the second input images which is a target of calculation and one or more previous second input images.

According to another aspect of the present invention, a storage medium having a program stored thereon for encoding a plurality of input images is provided. The program causes a computer to perform the steps of obtaining a plurality of first input images each containing first information on an object and a plurality of second input images each containing second information on the object, the plurality of second input images corresponding to the plurality of first input images, respectively, the second information being different from the first information, for one of the first input images, calculating a first predicted image from information contained in at least one of another one of the first input images and a corresponding one of the second input images, generating a first residual image from a difference between the one of the first input images and the corresponding first predicted image, specifying a region whose pixel value should be defined by a remainder, among pixels constituting the first residual image, based on a pixel value of the first residual image, converting, into a remainder, the pixel value included in the specified region of the first residual image which should be defined by a remainder, for one of the second input images, calculating a second predicted image from information contained in at least one of another one of the second input images and a corresponding one of the first input images, generating a second residual image from a difference between the one of the second input images and the corresponding second predicted image, specifying a region whose pixel value should be defined by a remainder, among pixels constituting the second residual image, based on a pixel value of the second residual image, converting, into a remainder, the pixel value included in the specified region of the second residual image which should be defined by a remainder, and encoding the first residual image after the conversion, the second residual image after the conversion, and additional information specifying the region which should be defined by a remainder in each of the first residual image and the second residual image.

According to a still another aspect of the present invention, an apparatus for encoding a plurality of input images is provided. The apparatus includes means for obtaining a plurality of first input images each containing first information on an object and a plurality of second input images each containing second information on the object, the plurality of second input images corresponding to the plurality of first input images, respectively, the second information being different from the first information, for one of the first input images, means for calculating a first predicted image from information contained in at least one of another one of the first input images and a corresponding one of the second input images, means for generating a first residual image from a difference between the one of the first input images and the corresponding first predicted image, means for specifying a region whose pixel value should be defined by a remainder, among pixels constituting the first residual image, based on a pixel value of the first residual image, means for converting, into a remainder, the pixel value included in the specified region of the first residual image which should be defined by a remainder, for one of the second input images, means for calculating a second predicted image from information contained in at least one of another one of the second input images and a corresponding one of the first input images, means for generating a second residual image from a difference between the one of the second input images and the corresponding second predicted image, means for specifying a region whose pixel value should be defined by a remainder, among pixels constituting the second residual image, based on a pixel value of the second residual image, means for converting, into a remainder, the pixel value included in the specified region of the second residual image which should be defined by a remainder, and means for encoding the first residual image after the conversion, the second residual image after the conversion, and additional information specifying the region which should be defined by a remainder in each of the first residual image and the second residual image.

ADVANTAGEOUS EFFECTS OF INVENTION

According to the present invention, an encoding technique for maintaining the balance between compression efficiency and compression quality can be achieved for a plurality of input images of different types containing different pieces of information on an object, respectively.

BRIEF DESCRIPTION OF DRAWINGS

Fig. 1 is a diagram showing a 3D displays reproduction system including an encoding/decoding system according to an embodiment of the present invention.
Fig. 2 is a functional block diagram of an encoder according to a related art of the present invention.
Fig. 3 is a functional block diagram of a decoder according to the related art of the present invention.
Fig. 4 is a functional block diagram showing a configuration intended for encoding of multi-view video according to a related art of the present invention.
Fig. 5 is a functional block diagram showing a configuration intended for decoding of multi-view video according to the related art of the present invention.
Fig. 6 is a functional block diagram of an encoder group according to the embodiment of the present invention.
Fig. 7 is a drawing showing an example of a procedure for generating predicted images by encoding according to the embodiment of the present invention.
Fig. 8 illustrates techniques for combining remainders and residuals according to the embodiment of the present invention.
Fig. 9 is a functional block diagram of a data format conversion unit according to the embodiment of the present invention.
Fig. 10 shows a diagram of an example of a Lookup table for determining a factor for use in calculating a remainder according to the embodiment of the present invention.
Fig. 11 is another functional block diagram of the data format conversion unit according to the embodiment of the present invention.
Fig. 12 is a functional block diagram of a data format reconversion unit according to the embodiment of the present invention.
Fig. 13 is a functional block diagram of a decoder group according to the embodiment of the present invention.
Fig. 14 is a schematic view showing a hardware configuration of an information processing apparatus functioning as a sender.
Fig. 15 is a schematic view showing a hardware configuration of an information processing apparatus functioning as a receiver.

DESCRIPTION OF EMBODIMENTS

An embodiment of the present invention will be described in detail with reference to the drawings. It is noted that, in the drawings, the same or corresponding portions have the same reference characters allotted, and detailed description thereof will not be repeated.

[A. Application Example]

First, a typical application example will be described for easy understanding of an encoding/decoding system according to an embodiment of the present application. It is noted that, needless to say, the application range of the encoding/decoding system according to the embodiment of the present application is not limited to a structure which will be described below, but can be applied to any structure. A method, an apparatus and a program for executing either of encoding and decoding, a storage medium that stores the program and the like thereon may also be included in the scope of the invention of the present application.

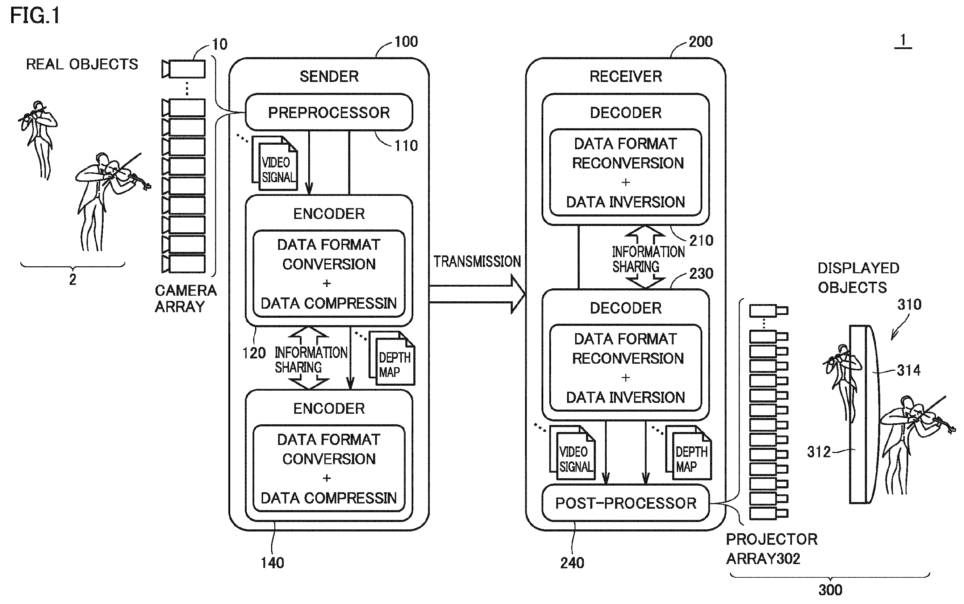

Fig. 1 is a diagram showing a 3D displays reproduction system 1 including the encoding/decoding system according to the embodiment of the present embodiment. Referring to Fig. 1, in 3D displays reproduction system 1, images of an object 2 are captured with a camera array including a plurality of cameras 10, thereby generating multi-view video. Multi-view video corresponds to a group of images obtained by capturing images of object 2 from a plurality of views, respectively. The multi-view video is transmitted upon encoding in an information processing apparatus 100 functioning as a sender. Then, data generated by encoding is decoded in an information processing apparatus 200 functioning as a receiver, and object 2 is reproduced by 3D display device 300. That is, 3D display device 300 displays 3D displays of object 2. It is noted that any medium, whether wired or wireless, can be used for the data transmission from the sender to the receiver.

In the embodiment of the present invention, encoding is executed on a group of images of different types related to one another. As a typical example, a plurality of pieces of video and a plurality of depth maps are generated from multi-view video obtained by the camera array, and encoding is executed on each of them. Video contains intensity information or color information at each view (i.e., gray scale information on each color component), and a depth map contains information on the distance (depth) from a view at which an image was captured to each point in an image. Typically, video contains a gray scale image (a gray scale value map) defined for each color component, and a depth map contains a gray scale image (a gray scale value map) in which the distance at each pixel location has been defined as a pixel value.

Information processing apparatus 100 functioning as the sender includes a preprocessor 110 which executes preprocessing on an input image, an encoder 120 which executes encoding of video, and an encoder 140 which executes encoding of depth maps. Preprocessing executed by preprocessor 110 includes processing of generating a depth map from a video signal. Encoders 120 and 140 execute encoding by sharing information between each other. By employing such a mechanism in which the encoders can share information, more efficient compression processing is achieved utilizing correlation (i.e., redundancy) among images.

Each encoding executed in information processing apparatus 100 includes processing of data format conversion and data compression, as will be described below. That is, the encoder according to the embodiment of the present invention executes data format conversion and data compression in parallel.

On the other hand, information processing apparatus 200 functioning as the receiver includes decoders 210, 230 which execute decoding on received data, and a postprocessor 240 which executes post-processing. Decoder 210 performs decoding of data concerning video contained in received data, and decoder 230 performs decoding of data concerning depth maps contained in received data. In correspondence to information sharing encoding as described above, decoders 210 and 230 execute decoding while sharing information between each other. Postprocessor 240 executes predetermined processing on the result of decoding performed by decoders 210 and 230, thereby generating a signal for 3D display device 300 to reproduce objects 2 for each projector of projector array 302.

Each decoding executed in information processing apparatus 200 includes processing of data format reconversion and data inversion, as will be described below. That is, the decoder according to the embodiment of the present invention executes data format reconversion and data inversion in parallel.

3D display device 300 includes a display screen mainly composed of a diffusion film 312 and a condenser lens 314, as well as a projector array 302 which projects multi-view video on display screen 310. Each of projectors constituting projector array 302 projects an image of a corresponding view in multi-view video output from information processing apparatus 200.

With such 3D displays reproduction system 1, a viewer who is in front of display screen 310 is provided with a reproduced 3D display of object 2. At this time, images of views entering a viewer's view are intended to be changed depending on the relative positions of display screen 310 and the viewer, giving the viewer an experience as if he/she is in front of object 2.

Such 3D displays reproduction system 1 is expected to be used for general applications in a movie theater, an amusement facility and the like, and to be used for industrial applications as a remote medical system, an industrial design system and an electronic advertisement system for public viewing or the like.

[B. (First) Related Art]

First, a technique relevant to the encoding/decoding system according to the embodiment of the present invention will be described. Encoding and decoding in accordance with MPEG-4 AVC (ITU-T Recommendation H.264|ISO/IEC 14496-10 Advanced Video Coding), one of the video compression standards, will be described.

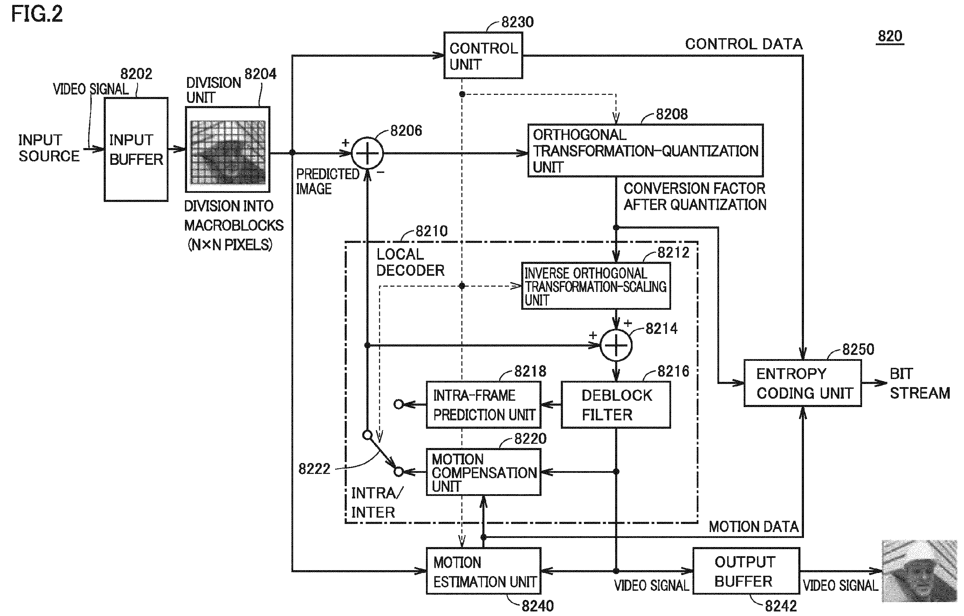

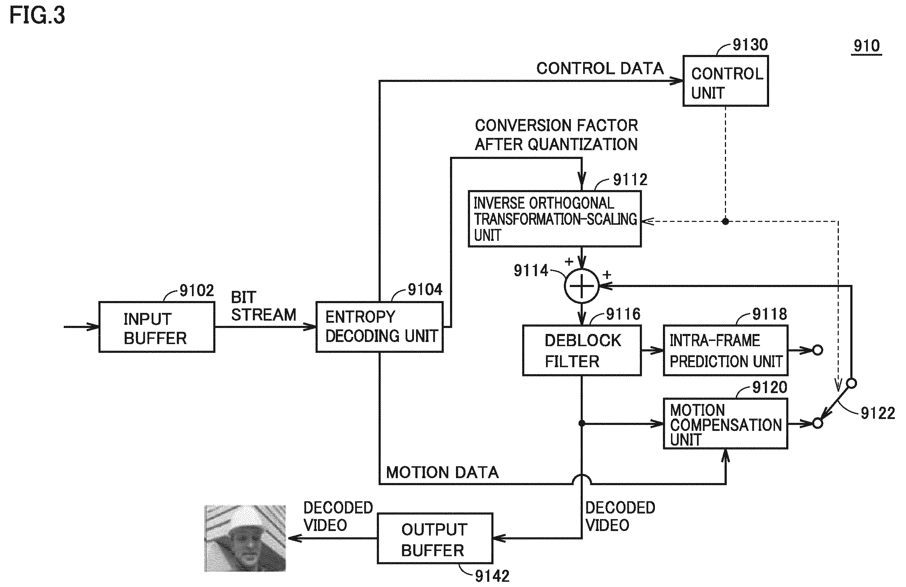

Fig. 2 is a functional block diagram of an encoder 820 according to the related art of the present invention. Fig. 3 is a functional block diagram of a decoder 910 according to the related art of the present invention.

First, encoding will be described with reference to Fig. 2. In encoder 820 shown in Fig. 2, each frame of a video signal, which is a moving picture received from an input source (i.e., a sequence of frames located in the time domain), is divided into a plurality of macroblocks, and each macroblock is interpolated using intra-frame prediction or inter-frame prediction. Intra-frame prediction is a technique for interpolating a target macroblock from other macroblocks in the same frame. On the other hand, inter-frame prediction is a technique for interpolating a target macroblock from information on another frame by means of any of forward prediction, backward prediction and bi-directional prediction.

That is, encoder 820 performs data compression paying attention to correlation (i.e., redundancy) with information on the same or an approximate frame.

More specifically, encoder 820 includes an input buffer 8202, a division unit 8204, a subtraction unit 8206, an orthogonal transformation-quantization unit 8208, a local decoder 8210, a control unit 8230, a motion estimation unit 8240, an output buffer 8242, and an entropy coding unit 8250.

Input buffer 8202 temporarily stores a video signal received from the input source. Division unit 8204 divides the video signal stored in input buffer 8202 into a plurality of macroblocks (NxN pixels). The output from division unit 8204 is supplied to subtraction unit 8206, control unit 8230 and motion estimation unit 8240.

Subtraction unit 8206 subtracts interpolation information previously calculated (intra-frame prediction or inter-frame prediction) from each macroblock received from division unit 8204, thereby calculating information on a residual value. That is, subtraction unit 8206 subtracts a predicted image from an original image, thereby generating a residual image. This processing of generating a residual image is typically executed on a macroblock basis.

Orthogonal transformation-quantization unit 8208 executes orthogonal transformation (typically, discrete Fourier transform) and quantization on the residual image received from subtraction unit 8206. Orthogonal transformation-quantization unit 8208 also executes scaling. A conversion factor after quantization received from orthogonal transformation-quantization unit 8208 is output to local decoder 8210 and entropy coding unit 8250.

Local decoder 8210 calculates interpolation information for (macroblocks of) a subsequent frame. More specifically, local decoder 8210 includes an inverse orthogonal transformation-scaling unit 8212, an addition unit 8214, a deblock filter 8216, an intra-frame prediction unit 8218, a motion compensation unit 8220, and a switching unit 8222.

Inverse orthogonal transformation-scaling unit 8212 executes inverse orthogonal transformation and scaling on the conversion factor after quantization received from orthogonal transformation-quantization unit 8208. That is, inverse orthogonal transformation-scaling unit 8212 inverses a residual image received from subtraction unit 8206. Addition unit 8214 adds the residual image received from inverse orthogonal transformation-scaling unit 8212 and a predicted image previously calculated (interpolation information). Upon receipt of the result of addition from addition unit 8214, deblock filter 8216 smoothes the block boundary so as to suppress occurrence of block noise.

That is, an original image supplied from input buffer 8202 is inversed by inverse orthogonal transformation-scaling unit 8212, addition unit 8214 and deblock filter 8216. Then, information on this inverted original image is supplied to intra-frame prediction unit 8218 and motion compensation unit 8220.

Intra-frame prediction unit 8218 generates a predicted image based on adjacent macroblocks.

Motion compensation unit 8220 generates a predicted image using inter-frame prediction. More specifically, motion compensation unit 8220 generates a predicted image based on the inverted original image and motion data received from motion estimation unit 8240.

Either of the predicted images generated by intra-frame prediction unit 8218 and motion compensation unit 8220, respectively, is selected appropriately by switching unit 8222 for supply to subtraction unit 8206.

Motion estimation unit 8240 calculates motion data (typically, moving vector) based on each macroblock received from division unit 8204 and information on the inverted original image of an immediately previous frame. This motion data as calculated is output to motion compensation unit 8220 and entropy coding unit 8250.

Control unit 8230 controls operations in orthogonal transformation-quantization unit 8208, inverse orthogonal transformation-scaling unit 8212, switching unit 8222, and motion estimation unit 8240. Control unit 8230 also instructs, as control data, parameters related to coding, the order of coding of respective components, and the like.

Entropy coding unit 8250 performs entropy coding on the conversion factor after quantization received from orthogonal transformation-quantization unit 8208, the motion data received from motion estimation unit 8240, and the control data received from control unit 8230, and as a result, outputs a bit stream. This bit stream as output is a result of encoding for a video signal as input.

Although it is not an indispensable feature, output buffer 8242 temporarily stores the inverted original image (video) received from deblock filter 8216.

Next, decoding will be described with reference to Fig. 3. In decoder 910 shown in Fig. 3, an original image is inverted from the bit stream received from encoder 820 shown in Fig. 2. Basically, reconversion of encoding performed in encoder 820 shown in Fig. 2 is performed. More specifically, decoder 910 includes an input buffer 9102, an entropy decoding unit 9104, an inverse orthogonal transformation-scaling unit 9112, an addition unit 9114, a deblock filter 9116, an intra-frame prediction unit 9118, a motion compensation unit 9120, a switching unit 9122, a control unit 9130, and an output buffer 9142.

Input buffer 9102 temporarily stores a bit stream received from encoder 820. Entropy decoding unit 9104 performs entropy decoding on the bit stream received from input buffer 9102, and as a result, outputs motion data, a conversion factor after quantization and control data.

Inverse orthogonal transformation-scaling unit 9112 executes inverse orthogonal transformation (typically, discrete Fourier inverse transform) and scaling on the conversion factor after quantization decoded by entropy decoding unit 9104. A residual image is inverted by these operations.

Addition unit 9114 adds the residual image received from inverse orthogonal transformation-scaling unit 9112 and a predicted image previously calculated (interpolation information). Upon receipt of the result of addition from addition unit 9114, deblock filter 9116 smoothes the block boundary so as to suppress occurrence of block noise.

Intra-frame prediction unit 9118 generates a predicted image based on adjacent macroblocks.

Motion compensation unit 9120 generates a predicted image using inter-frame prediction. More specifically, motion compensation unit 9120 generates a predicted image based on the inverted original image and the motion data decoded by entropy decoding unit 9104.

Either of the predicted images generated by intra-frame prediction unit 9118 and motion compensation unit 9120, respectively, is selected appropriately by switching unit 9122 for supply to addition unit 9114.

Control unit 9130 controls operations in inverse orthogonal transformation-scaling unit 9112 and switching unit 9122 based on the control data decoded by entropy decoding unit 9104.

Output buffer 9142 temporarily stores the inverted original image (video signal) received from deblock filter 9116.

According to MPEG-4 AVC, one of the video compression standards, transmission of a moving picture is achieved with data having been compressed by the encoding/decoding system as described above.

[C. (Second) Related Art]

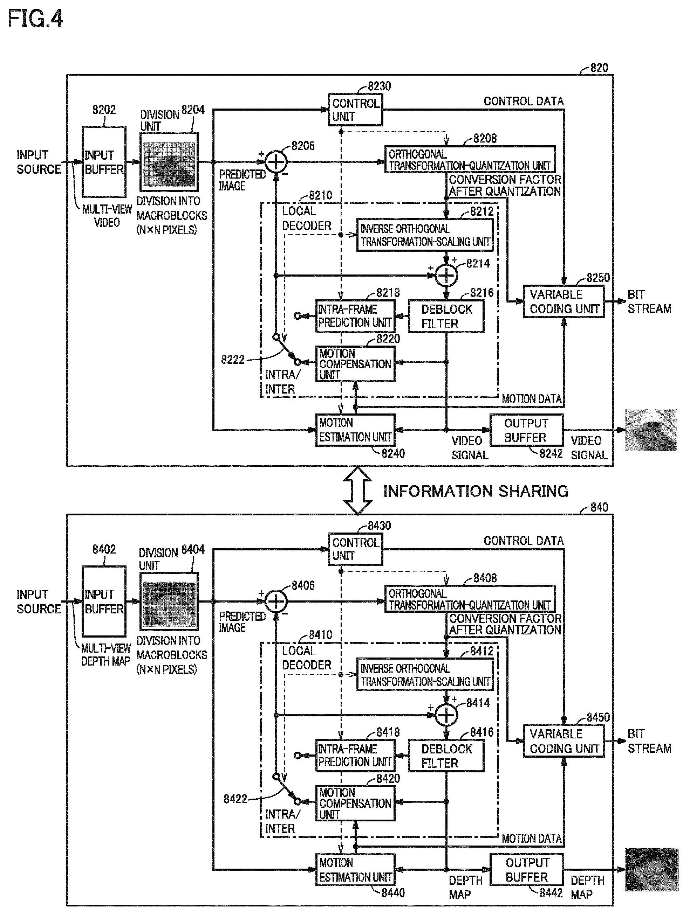

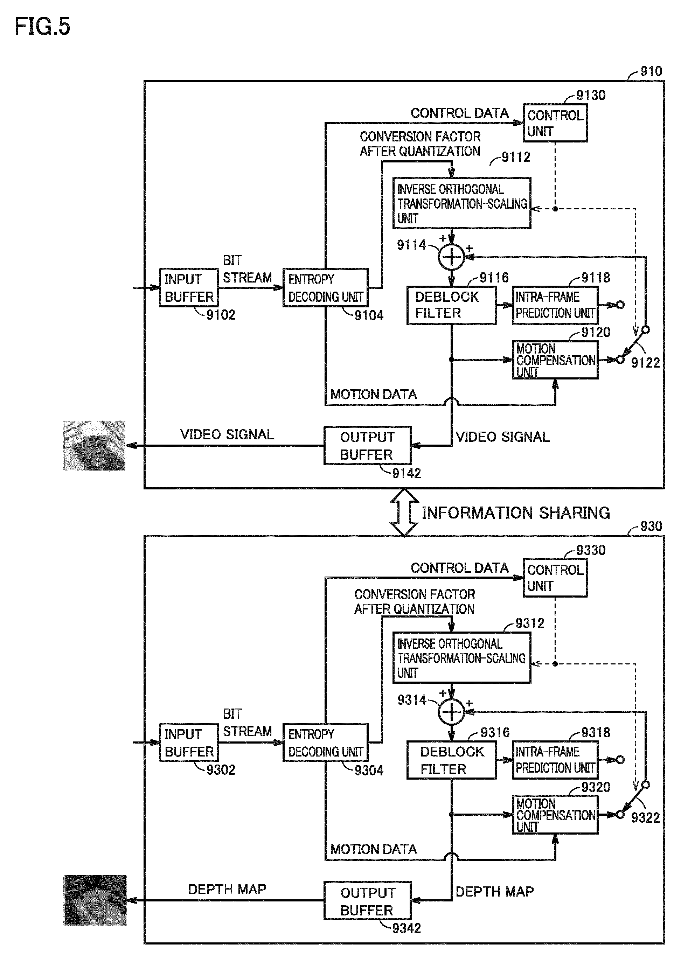

Next, an encoding/decoding system intended for Multiview Video Plus Depth (hereinafter also referred to as "MVD") will be described. Fig. 4 is a functional block diagram showing a configuration intended for encoding of multi-view video according to a related art of the present invention. Fig. 5 is a functional block diagram showing a configuration intended for decoding of multi-view video according to the related art of the present invention.

In the configuration shown in Fig. 4, multi-view video and corresponding multi-view depth maps constituting MVD are supplied as input data. Encoder 820 encodes multi-view video, and encoder 840 encodes multi-view depth maps. Encoders 820 and 840 cooperate with each other to execute encoding. That is, Fig. 4 shows a configuration for coding multi-view video and multi-view depth maps in an integrated manner. According to this scheme, information can be shared between the encoders, and encoding efficiency can thereby be further improved.

Encoder 820 has a configuration substantially identical to that of encoder 820 shown in Fig. 2. However, encoder 820 shown in Fig. 4 encodes multi-view video. Encoder 840 has a configuration similar to that of encoder 820. However, encoder 840 encodes multi-view depth maps.

Specifically, encoder 840 includes an input buffer 8402, a division unit 8404, a subtraction unit 8406, orthogonal transformation-quantization unit 8408, a local decoder 8410, a control unit 8430, a motion estimation unit 8440, output buffer 8442, and an entropy coding unit 8450. Then, local decoder 8410 includes an inverse orthogonal transformation-scaling unit 8412, an addition unit 8414, a deblock filter 8416, intra-frame prediction unit 8418, a motion compensation unit 8420, and a switching unit 8422.

When inverting MVD from a bit stream obtained by encoding the MVD, the configuration as shown in Fig. 5 is used. The configuration shown in Fig. 5 includes two decoders 910 and 930 in correspondence to two encoders 820 and 840 shown in Fig. 4, respectively. In decoding, decoders 910 and 930 also cooperate with each other.

As a technique for achieving integrative coding (joint coding) in encoding of MVD, there are various possible techniques. However, a specific technique therefor has not been established sufficiently so far. As a basic way of thinking, a technique for causing encoders to share information on motion estimation (typically, moving vector) as disclosed in NPD 3, for example, has been proposed. This is because video and a depth map are synchronized with each other as they are obtained by capturing images of an identical object.

[D. Overview]

The encoding/decoding system according to the embodiment of the present invention typically encodes a plurality of input images, such as MVD, including a plurality of first input images (multi-view video/multi-view images) containing first information (intensity information) of an object and a plurality of second input images (multi-view depth maps) containing second information (depth maps) of the object, the second information being different from the first information, the plurality of second input images corresponding to the plurality of first input images, respectively. However, MVD is not a limitation, but encoding and decoding can be performed on input image groups of a plurality of types whose information can be shared (typically, a pair of input image groups). Therefore, the present system is applicable to image groups containing not only the combination of video and depth maps but also the combination of other types of information.

That is, in consideration of integrative coding of multi-view video and multi-view depth maps, in the encoding/decoding system according to the embodiment of the present invention, data format conversion processing is incorporated into each of the encoder for video and the encoder for depth maps. For example, information about the data format type is transmitted from the encoder group to the decoder group. By adding such information, compatibility with conventional apparatuses and the existing standards can be ensured.

The encoding/decoding system according to the embodiment of the present invention includes data format conversion processing that can be incorporated into the existing standard as described above. In the encoding/decoding system according to the embodiment of the present invention, the concept of remainder is introduced to further increase data compression efficiency.

More specifically, in order to achieve data compression, the configurations according to the related art described above employ a data format in which each pixel value is defined by a residual corresponding to the difference between an original image and a predicted image. On the other hand, the embodiment of the present invention employs a data format in which each pixel value is defined by a "remainder." This remainder is defined as a remainder (integer value) obtained by dividing a certain calculated value by a predetermined integer value. At this time, a quotient is also an integer. More specifically, a remainder is calculated by a modulo operation. The procedure for calculating a remainder and the like will be described later in detail.

The embodiment of the present invention may representatively employ a data format in which each pixel value is defined only by a remainder instead of a residual, or a data format in which each pixel value is defined by the combination of a remainder and a residual. That is, in the embodiment of the present invention, by using not only a residual used in the existing standards but also a remainder, the data compression efficiency can be increased, and the quality thereof can also be improved.

Furthermore, the encoding/decoding system according to the embodiment of the present invention can further improve the data compression efficiency by sharing motion data and depth maps for video.

[E. Functional Configuration of Encoder Group]

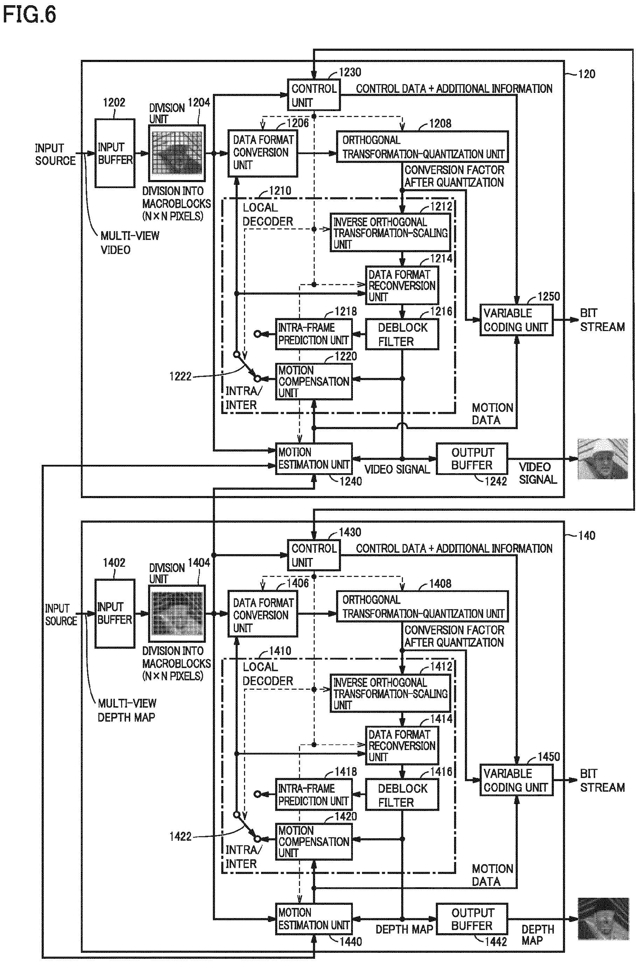

First, the functional configuration of the encoder group constituting the encoding/decoding system according to the embodiment of the present invention will be described. Fig. 6 is a functional block diagram of the encoder group according to the embodiment of the present invention. Referring to Fig. 6, in encoding according to the embodiment of the present invention, multi-view video and corresponding multi-view depth maps constituting MVD are supplied as input data. Encoder 120 shown in Fig. 1 encodes the multi-view video, and encoder 140 encodes the multi-view depth maps. Encoders 120 and 140 perform encoding while sharing information between each other. Encoders 120 and 140 have a common basic configuration.

Encoder 120 for encoding the multi-view video includes an input buffer 1202, a division unit 1204, a data format conversion unit 1206, an orthogonal transformation-quantization unit 1208, a local decoder 1210, a control unit 1230, a motion estimation unit 1240, an output buffer 1242, and entropy coding unit 1250. Local decoder 1210 includes an inverse orthogonal transformation-scaling unit 1212, a data format reconversion unit 1214, a deblock filter 1216, an intra-frame prediction unit 1218, a motion compensation unit 1220, and a switching unit 1222.

On the other hand, encoder 140 for encoding multi-view depth maps includes an input buffer 1402, a division unit 1404, a data format conversion unit 1406, an orthogonal transformation-quantization unit 1408, a local decoder 1410, a control unit 1430, a motion estimation unit 1440, an output buffer 1442, and an entropy coding unit 1450. Local decoder 1410 includes an inverse orthogonal transformation-scaling unit 1412, a data format reconversion unit 1414, a deblock filter 1416, intra-frame prediction unit 1418, a motion compensation unit 1420, and a switching unit 1422.

In summary, encoder 120 differs from encoder 820 shown in Figs. 2 and 4 mainly in that data format conversion unit 1206 is provided instead of subtraction unit 8206 for generating a residual image, and data format reconversion unit 1214 is provided instead of addition unit 8214 for inverting an original image. Similarly, encoder 140 differs from encoder 840 shown in Fig. 4 mainly in that data format conversion unit 1406 is provided instead of subtraction unit 8406 for generating a residual image, and data format reconversion unit 1414 is provided instead of addition unit 8414 for inverting an original image. In association with these changes in configuration, the operations of control units 1230 and 1430 also differ from those of control units 8230 and 8430, respectively.

Furthermore, in connection with information sharing between encoders 120 and 140, operations in motion estimation units 1240 and 1440 also differ from those of motion estimation units 8240 and 8440, respectively.

On the other hand, the functions of input buffers 1202 and 1402, division units 1204 and 1404, orthogonal transformation-quantization units 1208 and 1408, motion estimation units 1240 and 1240, output buffers 1242 and 1442, as well as entropy coding units 1250 and 1450 are similar to those of input buffers 8202 and 8402, division units 8204 and 8404, orthogonal transformation-quantization units 8208 and 8408, motion estimation units 8240 and 8440, output buffers 8242 and 8442, as well as entropy coding units 8250 and 8450 shown in Fig. 4, respectively. The functions of inverse orthogonal transformation-scaling units 1212 and 1412, deblock filters 1216 and 1416, intra-frame prediction units 1218 and 1418, as well as switching units 1222 and 1422 of local decoders 1210 and 1410 are similar to those of inverse orthogonal transformation-scaling units 8212 and 8412, deblock filters 8216 and 8416, intra-frame prediction units 8218 and 8418, as well as switching units 8222 and 8422 of local decoders 8210 and 8410 shown in Fig. 4, respectively.

[F. Processing in Encoders 120 and 140]

Next, the processing in encoders 120 and 140 will be described. Referring to Fig. 6, a video signal is supplied from an input source to input buffer 1202, and a corresponding depth map is supplied to input buffer 1402. Typically, multi-view video captured with plurality of cameras 10 (camera array) is input as video, and corresponding multi-view depth maps are input as depth maps. However, MVD is not limited as such, but may be single-view video captured with a single camera 10 and a corresponding depth map.

Such video signals are temporarily stored in input buffer 1202, and all or some of them are supplied to division unit 1204 as input data. Similarly, such depth maps are temporarily stored in input buffer 1402, and all or some of them are supplied to division unit 1404 as input data.

Division unit 1204 divides each frame included in a video signal output from input buffer 1202 into a plurality of macroblocks (NxN pixels). Similarly, division unit 1404 divides each frame included in a depth map received from input buffer 1402 into a plurality of macroblocks (NxN pixels). This is for accelerating prediction processing by using a suitable image size as a processing unit. However, one frame may be processed as it is without division into macroblocks in consideration of computing power of an information processing apparatus, processing time requested, and the like. Divided macroblocks are supplied to data format conversion units 1206 and 1406, respectively.

Data format conversion unit 1206 performs data format conversion using macroblocks received from division unit 1204 and motion-compensated macroblocks received from intra-frame prediction unit 1218 or motion compensation unit 1220. Similarly, data format conversion unit 1406 performs data format conversion using macroblocks received from division unit 1404 and motion-compensated macroblocks received from intra-frame prediction unit 1418 or motion compensation unit 1420.

More specifically, motion-compensated macroblocks correspond to a motion image indicating a change component from one or more previous input images, contained in a subsequent input image, and intra-frame prediction unit 1218 or motion compensation unit 1220 estimates this motion image for video. First, data format conversion unit 1206 generates a residual image from the difference between a subsequent input image and an estimated motion image. Then, based on the pixel value of the residual image, data format conversion unit 1206 specifies a region of pixels constituting the residual image whose pixel value should be defined by a remainder. Data format conversion unit 1206 converts, into a remainder, the pixel value for the specified region which should be defined by a remainder. By such a procedure, a residual image after the conversion is output as an image after data format conversion. Similarly, data format conversion unit 1406 executes similar processing for depth maps.

In this data format conversion, macroblocks in which part or all of pixel values have been defined by remainders are generated. The detailed procedure of this data format conversion will be described later.

Corresponding motion-compensated macroblocks supplied from intra-frame prediction unit 1218 or motion compensation unit 1220 are utilized as side information for reconstructing original macroblocks from macroblocks generated by data format conversion unit 1206. Similarly, corresponding motion-compensated macroblocks supplied from intra-frame prediction unit 1418 or motion compensation unit 1420 are utilized as side information for reconstructing original macroblocks from macroblocks generated by data format conversion unit 1406.

The macroblocks after data format conversion for video are supplied to orthogonal transformation-quantization unit 1208. Orthogonal transformation-quantization unit 1208 executes orthogonal transformation, quantization and scaling, thereby further optimizing the macroblocks after data format conversion as received. The discrete Fourier transform is typically adopted as orthogonal transformation. A quantization table for use in quantization and a scaling factor for use in scaling may be optimized in accordance with the data format type ("type") indicating the type of data format conversion in data format conversion unit 1206. It is noted that in data format conversion unit 1206, several types of data format conversion are executable, and an example of these types of data format conversion will be described later in detail.

The conversion factor after quantization received from orthogonal transformation-quantization unit 1208 is output to local decoder 1210 (inverse orthogonal transformation-scaling unit 1212) and entropy coding unit 1250. Similarly, orthogonal transformation-quantization unit 1408 executes orthogonal transformation, quantization and scaling on macroblocks after data format conversion for depth maps.

Inverse orthogonal transformation-scaling unit 1212 executes inverse orthogonal transformation and scaling on the conversion factor after quantization for video received from orthogonal transformation-quantization unit 1208. That is, inverse orthogonal transformation-scaling unit 1212 executes processing inversely to the conversion processing in orthogonal transformation-quantization unit 1208, and inverses the macroblocks after data format conversion. Furthermore, data format reconversion unit 1214 executes data format reconversion on the inverted macroblocks after data format conversion to inverse each divided macroblock. Similarly, inverse orthogonal transformation-scaling unit 1412 executes inverse orthogonal transformation and scaling on the conversion factor after quantization for depth maps received from orthogonal transformation-quantization unit 1408.

Upon receipt of the inverted macroblocks from data format reconversion units 1214 and 1414, deblock filters 1216 and 1416 respectively smooth the block boundary so as to suppress occurrence of block noise.

That is, the original video is inverted by inverse orthogonal transformation-scaling unit 1212, data format reconversion unit 1214 and deblock filter 1216. Then, this inverted original image is supplied to intra-frame prediction unit 1218 and motion compensation unit 1220. Similarly, the original depth maps are inverted by inverse orthogonal transformation-scaling unit 1412, data format reconversion unit 1414 and deblock filter 1416.

Intra-frame prediction unit 1218 generates a predicted image (hereinafter also referred to as an "intra-macroblock") based on adjacent macroblocks. Motion compensation unit 1220 generates a predicted image (hereinafter also referred to as an "inter-macroblock") using inter-frame prediction. These predicted images will be motion-compensated macroblocks.

There are connections provided between encoders 120 and 140 which indicate what types of information are shared therebetween. Parameter for notifying such shared information to each other will be described later.

Motion estimation unit 1240 estimates motion data about video, and motion estimation unit 1440 estimates motion data about a depth map. Typically, moving vector is used for these pieces of motion data.

Motion estimation unit 1240 basically estimates motion data about video based on original video divided into respective macroblocks received from division unit 1204 and based on inverted original video of an immediately preceding frame. In order to improve the estimation accuracy of this motion data about video, corresponding depth maps are utilized. More specifically, motion estimation unit 1240 uses a depth map received from encoder 140 included in the same frame as the frame being processed for estimation of motion data (typically, in the spatial direction).

Similarly, motion estimation unit 1440 basically estimates motion data about a depth map based on the depth map divided into respective macroblocks received from division unit 1404 and based on an inverted depth map of an immediately preceding frame. In order to improve the estimation accuracy of motion data (in the spatial direction and/or the time direction) about a depth map in motion estimation unit 1440, motion data estimated in encoder 120 is utilized.

The details of the processing for sharing these video and depth maps will be described later.

Control unit 1230 controls operations in data format conversion unit 1206, orthogonal transformation-quantization unit 1208, inverse orthogonal transformation-scaling unit 1212, data format reconversion unit 1214, switching unit 1222, and motion estimation unit 1240. Control unit 1230 also outputs parameters related to coding, the order of coding of respective components and the like, as control data. Furthermore, control unit 1230 outputs additional information related to data format conversion (data format type "type", threshold values, flags, etc.), to entropy coding unit 1250.

Similarly, control unit 1430 controls operations in data format conversion unit 1406, orthogonal transformation-quantization unit 1408, inverse orthogonal transformation-scaling unit 1412, data format reconversion unit 1414, switching unit 1422, and motion estimation unit 1440. Control unit 1430 also outputs parameters related to coding, the order of coding of respective components and the like, as control data. Furthermore, control unit 1430 outputs additional information related to data format conversion (data format type "type", threshold values, flags, etc.), to entropy coding unit 1450.

Furthermore, control units 1230 and 1430 exchange several pieces of control data in order to share information as described above. Integrative coding of MVD can thus be achieved.

Entropy coding unit 1250 codes a residual image after the conversion and additional information that specifies the region which should be defined by a remainder. More specifically, entropy coding unit 1250 performs entropy coding on the conversion factor after quantization received from orthogonal transformation-quantization unit 1208, the motion data received from motion estimation unit 1240, as well as the control data and additional information received from control unit 1230, and as a result, generates a bit stream for video. This generated bit stream is a result of encoding for a video signal as input. Similarly, entropy coding unit 1450 performs entropy coding on the conversion factor after quantization received from orthogonal transformation-quantization unit 1408, the motion data received from motion estimation unit 1240, as well as the control data and additional information received from control unit 1430, and as a result, outputs a bit stream for depth maps.

Although it is not an indispensable feature, output buffer 1242 temporarily stores the inverted original video received from deblock filter 1216. Similarly, output buffer 1442 temporarily stores the inverted original depth maps received from deblock filter 1416.

Main components in the above-described functional configuration will be described below in more detail.

[G. Processing in Motion Estimation Units 1240 and 1440]

First, processing for estimation of motion data in motion estimation units 1240 and 1440 will be described as a form of information sharing between encoders 120 and 140 shown in Fig. 1. It is noted that the method for sharing information between an encoder for video and an encoder for depth maps is not limited to the following one.

(g1 : Estimation of Motion Data about Video in Motion Estimation Unit 1240)

In estimation of motion data about video (multi-view video) in motion estimation unit 1240, multi-view depth maps are utilized. As this form of use of depth maps, the following methods are typically possible.

(i) A corresponding depth map itself is output as estimated motion data.
(ii) A corresponding depth map itself is treated as an initial value of estimated motion data, and further, upon making adjustment using information on video and the like, output as final motion data.

The difference between frames obtained at the same time depends on the difference between corresponding views (i.e., the difference in the spatial domain). It is based on the knowledge that a corresponding depth map can be used as it is as motion data of video in the spatial direction since this difference in the spatial domain has strong correlation with a corresponding depth map. By utilizing such depth maps, processing efficiency and accuracy can be improved.

Alternatively, motion data about a depth map (multi-view depth map) itself may be used as motion data about video (multi-view video). Alternatively, motion data about a corresponding depth map may be treated as an initial value of motion data of estimated video, and further, upon making adjustment using video and the like, output as final motion data.

(g2: Estimation of Motion Data about Depth Map in Motion Estimation Unit 1440)

In estimation of motion data about a depth map (multi-view depth map) in motion estimation unit 1440, multi-view video is utilized. As this form of use of multi-view video, the following two methods are typically possible.

(iii) Motion data about corresponding video itself is output from motion estimation unit 1440 as motion data.
(iv) Motion data about corresponding video is treated as an initial value of an estimated depth map, and further, upon making adjustment using the depth map and the like, output as final motion data.

That is, in the above-mentioned forms (iii) and (iv), motion data about corresponding video is used for encoding in encoder 140.

However, motion data about video may not be used for encoding depth maps. In this case, the following two methods are typically possible.

(v) Encoder 140 generates motion data from a depth map without using motion data about video, and uses the generated motion data for coding and data compression.
(vi) Encoder 140 treats the depth map itself as motion data without using motion data about video.

(g3: Example of Generation of Predicted Image)

A predicted image (interpolation information) generated by information sharing as described above and used in encoding will be described.

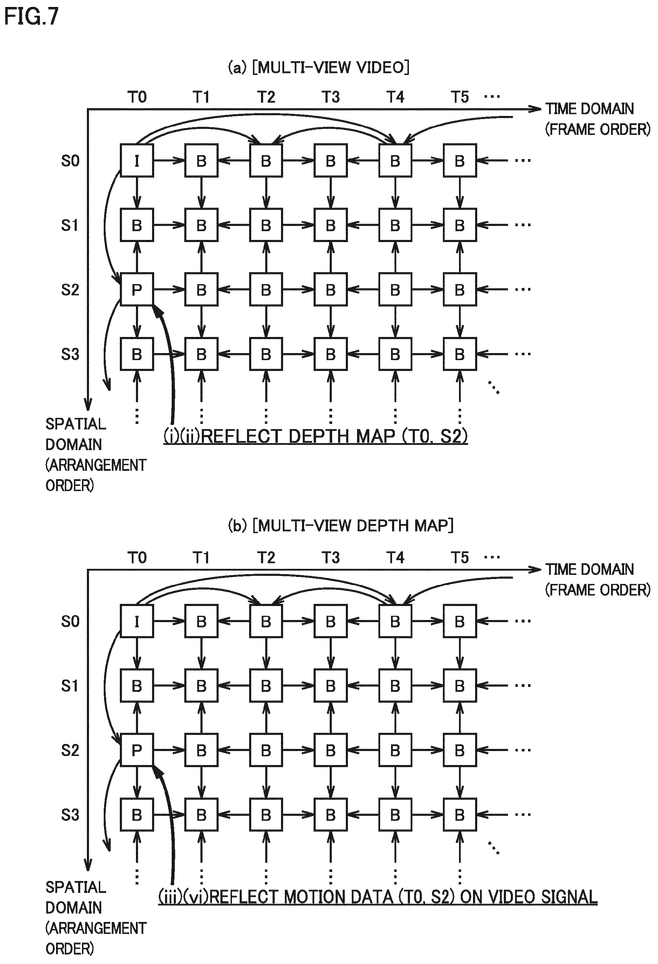

Fig. 7 is a drawing showing an example of a procedure for generating predicted images by encoding according to the embodiment of the present invention. Fig. 7 shows at (a) an example of a procedure for generating predicted images about multi-view video, and Fig. 7 shows at (b) an example of a procedure for generating predicted images about multi-view depth maps. Fig. 7 shows an example in which each of plurality of cameras 10 arranged at arrangement positions S0, S1, S2, S3, ... outputs frames at time points T0, T1, T2, T3, T4, T5, ... sequentially. A predicted image for each frame is generated using intra-frame prediction or inter-frame prediction. In Fig. 7, "I" indicates an I frame (Intra-coded frame), "P" indicates a P frame (predicted frame), and "B" indicates a B frame (bi-directional predicted frame). It is noted that although Fig. 7 illustrates the generation procedure on a frame basis for ease of description, a predicted image may be generated on a macroblock basis as described above.

First, for a frame serving as a reference (the frame captured at time point T0 with camera 10 in arrangement position S0 in Fig. 7), a predicted image (I frame) is generated using intra-frame prediction rather than inter-frame prediction. Using this I frame, predicted images are sequentially generated in accordance with a predetermined generation order.

In such a generation procedure, in the case of utilizing a multi-view depth map for estimation of motion data about video (multi-view video) (in the above-described case (i) or (ii)), a depth map of a corresponding frame is reflected on a generated predicted image. In Fig. 7, a corresponding depth map (time point T0 and arrangement position S2) is reflected on the frame to be subjected to inter-frame prediction (the frame captured at time point T0 with camera 10 in arrangement position S2).

On the other hand, in the case of utilizing multi-view video for estimation of motion data about a depth map (multi-view depth map) (in the above-described case (iii) or (iv)), motion data of a corresponding frame is reflected on a predicted image. In Fig. 7, motion data about corresponding video (time point T0 and arrangement position S2) is reflected on the frame to be subjected to inter-frame prediction (the frame captured at time point T0 with camera 10 in arrangement position S2).

(g4: Other Examples)

If macroblocks of video do not have sufficient texture, a depth map itself may be used as motion data of each corresponding macroblock of video. It is noted that the amount of texture of a macroblock of video may be determined by applying a threshold value to its gradient-like macroblock. In this case, in order to generate motion data of video, it is necessary to generate information on a missing region. The information on this missing region can be generated by estimation through use of a depth map or motion data of the depth map as an initial value. Alternatively, the information on this missing region may be generated by estimation only from information on video. A similar technique can be applied to depth maps.

[H. Processing in Data Format Conversion Units 1206 and 1406]

Next, processing in data format conversion units 1206 and 1406 according to the embodiment of the present invention will be described in detail. It is noted that, since processing in data format conversion units 1206 and 1406 is substantially identical, data format conversion unit 1206 will be described below for ease of description.

(h1 : Data Format Type)

As described above, in the embodiment of the present invention, both the configuration of defining only by a remainder and the configuration of defining by the combination of remainders and residuals can be employed. In the latter case, both of (1) the combination of remainders and residuals on a pixel basis and (2) the combination of remainders and residuals (or all zero) on a macroblock basis can further be employed.

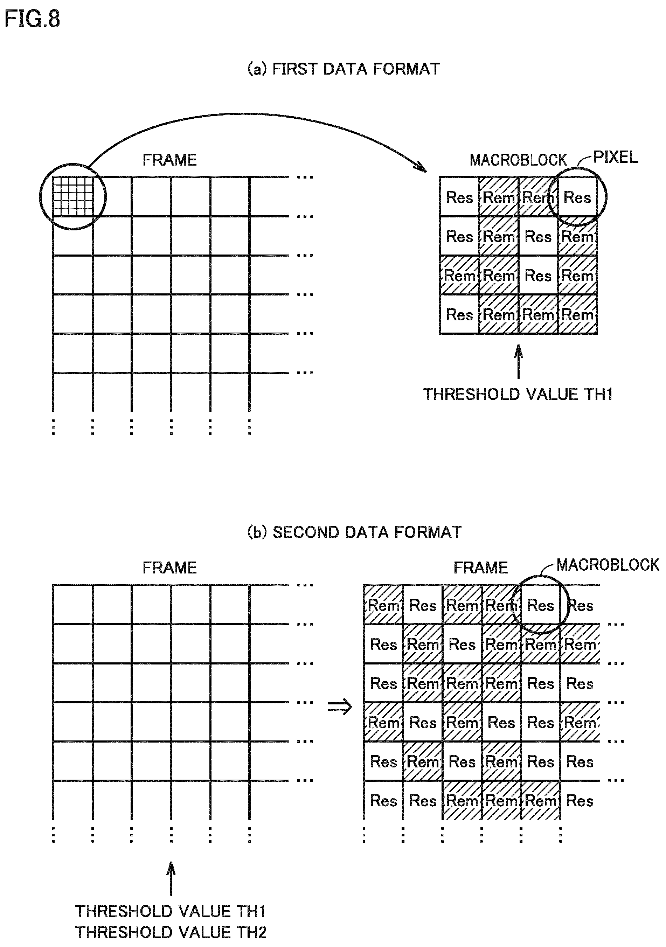

Fig. 8 illustrates techniques for combining remainders and residuals according to the embodiment of the present invention. Fig. 8 shows at (a) a technique for combining remainders and residuals on a pixel basis, and Fig. 8 shows at (b) a technique for combining remainders and residuals on a macroblock basis. It is noted that, in Fig. 8, "Rem" indicates a remainder, and "Res" indicates a residual.

As shown in Fig. 8 at (a), each frame is processed upon division into a plurality of macroblocks. Applying predetermined evaluation criteria (typically, a threshold value TH1 which will be described later), it is determined by which of a remainder and a residual each of a plurality of pixels constituting each macroblock should be defined.

On the other hand, as shown in Fig. 8 at (b), applying predetermined evaluation criteria (typically, threshold values TH1 and TH2 which will be described later), it is determined which of a remainder (remainder macroblock) and a residual (residual macroblock) is used for each of a plurality of macroblocks constituting a frame. For a pixel or macroblock determined that it should be defined by a remainder, the pixel value thereof is calculated using a modulo operation which will be described later.

It is noted that when definition is given only by a remainder, a remainder is calculated for each pixel/macroblock omitting the application of the evaluation criteria as mentioned above.

(h2: Overview of Processing in Data Format Conversion Unit 1206)

Since there are a plurality of types of macroblocks after data format conversion output from data format conversion unit 1206 as described above, information indicating the procedure of this data format conversion (data format type "type") is used as part of side information. However, side information may not be included for a region to be defined by a residual. That is, it is implied that a region (pixel or macroblock) for which corresponding side information exists has been defined by a remainder.

Data format conversion unit 1206 executes data format conversion on the difference (i.e., residual image) between an original macroblock and a motion-compensated macroblock (intra-macroblock generated by intra-frame prediction unit 1218 or inter-macroblock generated by motion compensation unit 1220) in the same frame. For a region defined by a remainder, a motion-compensated macroblock is also used as side information.

Moreover, in order to determine a factor (denominator) for use in a modulo operation for calculating a remainder, a gradient-like macroblock for a motion-compensated macroblock (intra-macroblock or inter-macroblock) or a macroblock containing information similar thereto is generated. It is noted that information on the gradient may be calculated on a frame basis.

Detailed processing for a data format in which a remainder and a residual are combined on a pixel basis (hereinafter also referred to as a "first data format") and a data format in which a remainder and a residual are combined on a macroblock basis (hereinafter also referred to as a "second data format") will be described below. It is noted that, in the following description, it is obvious that a data format in which the pixel value is defined only by a remainder can be achieved by eliminating processing related to calculation of a residual.

(h3: Data Format Conversion Unit 1206 (for First Data Format))

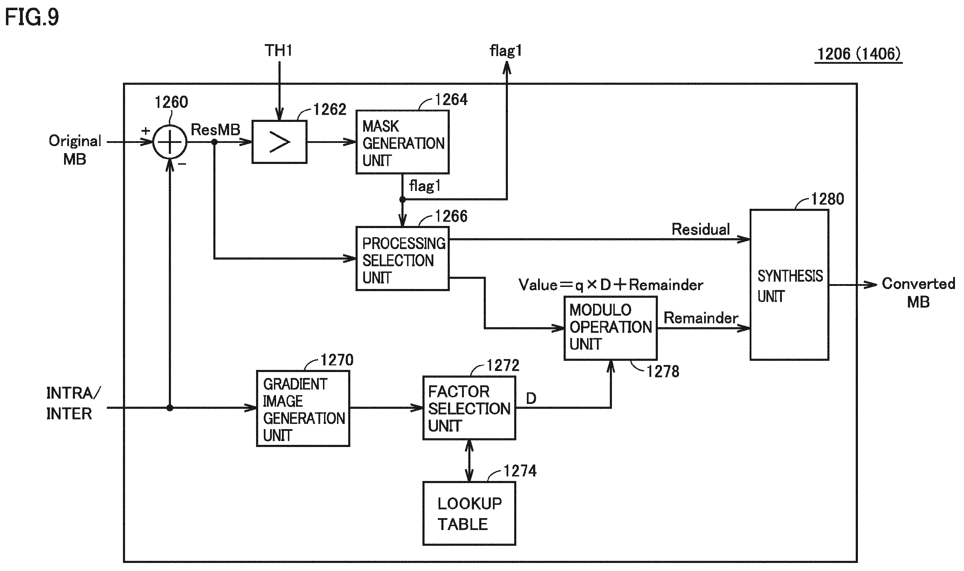

Fig. 9 is a functional block diagram of data format conversion unit 1206 according to the embodiment of the present invention. Referring to Fig. 9, data format conversion unit 1206 includes a subtraction unit 1260, a comparison unit 1262, a mask generation unit 1264, a processing selection unit 1266, a gradient image generation unit 1270, a factor selection unit 1272, a Lookup table 1274, a modulo operation unit 1278, and a synthesis unit 1280.

Subtraction unit 1260 subtracts a motion-compensated macroblock (intra-macroblock or inter-macroblock) (denoted as "Inter/Intra MB" in Fig. 9) from an original macroblock (denoted as "Original MB" in Fig. 9) received from division unit 1204 (Fig. 6), thereby generating a residual macroblock (denoted as "Res MB" in Fig. 9).

Comparison unit 1262 and mask generation unit 1264 specify a pixel defined by a residual in a target macroblock. That is, comparison unit 1262 determines a region which should be defined by a remainder on a pixel basis based on the magnitude of the pixel value of each of pixels constituting a residual image (residual macroblock). Mask generation unit 1264 outputs, as additional information (typically, a flag "flag 1" which will be described later), information for specifying each pixel defined by a remainder, among the pixels constituting the residual image.

More specifically, comparison unit 1262 compares the pixel value of each pixel constituting a target macroblock and threshold value TH1 which is part of side information. Mask generation unit 1264 determines that a pixel whose pixel value is less than threshold value TH1 should be defined by a remainder, and determines that other pixels should be defined by a residual. That is, since information on a region whose pixel value is small in a residual macroblock may be lost greatly, data compression is performed upon conversion into the data format in which definition is given by a remainder rather than a residual.

This information indicating by which of a remainder and a residual each pixel is to be defined is included in side information as flag "flag 1". Mask generation unit 1264 generates, in a target frame, a mask (map) obtained by developing the value of flag "flag 1" for each pixel, and outputs the mask (map) to processing selection unit 1266 and to control unit 1230. Based on the value of flag "flag 1" received from mask generation unit 1264, the procedure to be applied to each pixel in encoding and decoding is determined.

In data format conversion unit 1206, processing selection unit 1266 selects processing for each of pixels constituting a target macroblock based on the value of flag "flag 1". Specifically, processing selection unit 1266 directly outputs the pixel value of a pixel determined that it should be defined by a residual (denoted as "Residual" in Fig. 9) to synthesis unit 1280, and outputs the pixel value of a pixel determined that it should be defined by a remainder (denoted as "Remainder" in Fig. 9) to modulo operation unit 1278.

It is noted that other evaluation criteria may be applied to a pixel determined that it should be defined by a residual to convert the pixel values of some or all pixels of a region which should be defined by a residual into zero. These pixels converted into zero are still treated as the "region which should be defined by a residual."

Modulo operation unit 1278 executes a modulo operation on the pixel value for the region which should be defined by a remainder. More specifically, modulo operation unit 1278 performs a modulo operation using a factor D (integer) set by factor selection unit 1272 as a denominator to calculate a remainder. This calculated remainder is output to synthesis unit 1280. Synthesis unit 1280 combines the remainder or residual input for each pixel, and outputs a macroblock after data format conversion (denoted as "Converted MB" in Fig. 9).

In data format conversion unit 1206, factor (denominator) D for use in the modulo operation in modulo operation unit 1278 may be varied dynamically based on a motion-compensated macroblock. A region where the pixel value is large in a motion-compensated macroblock means a region where redundancy between frames is relatively small. For such a region, it is preferable that information contained therein be maintained even after data format conversion. Therefore, suitable factor D is selected in accordance with the magnitude of redundancy between frames.

As a method for dynamically varying such factor D, any method can be employed. Fig. 9 shows an example of processing of obtaining gradient information on a motion-compensated macroblock (motion image) and determining the value for use as a modulus in a modulo operation based on the obtained gradient information. More specifically, a gradient-like macroblock for a motion-compensated macroblock is generated, and factor D for use as a modulus is determined in accordance with the magnitude of the pixel value of each pixel in this gradient-like macroblock.

Specifically, gradient image generation unit 1270 generates a gradient-like macroblock for a motion-compensated macroblock. Then, the value for use as a modulus in a modulo operation may be determined with reference to a predetermined correspondence between the gradient and the value for use as a modulus in a modulo operation. More specifically, with reference to Lookup table 1274, factor selection unit 1272 determines factor D for each pixel based on the pixel value (gradient) of each pixel of the generated gradient-like macroblock. Through the use of Lookup table 1274, factor D can be determined nonlinearly for the gradient-like macroblock. By thus determining factor D nonlinearly, the image quality after decoding can be improved.

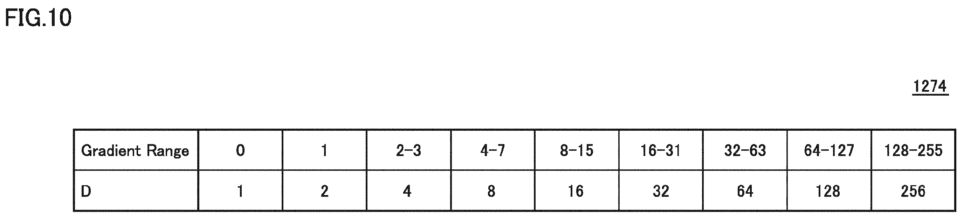

Fig. 10 is a diagram showing an example of Lookup table 1274 for determining factor D for use in calculation of a remainder according to the embodiment of the present invention. As shown in Fig. 10, discretization into a plurality of levels (gradient ranges) is carried out in accordance with the gradient, and factor D for each level is selected. Gradient image generation unit 1270 selects factor D corresponding to each pixel of a target macroblock, with reference to Lookup table 1274. Here, factor D is determined for each pixel of each color component included in the target macroblock.

In Lookup table 1274 shown in Fig. 10, a value (factor D) to be used as the modulus in the modulo operation is designed to be a power of two. By assigning factor D in this way, the modulo operation can be accelerated. Since Lookup table 1274 can be designed optionally, a Lookup table with a smaller number of levels or a larger number of levels may be adopted.

Alternatively, it is not always necessary to use a Lookup table, but factor D may be determined using a predetermined function or the like. For example, the pixel value of each pixel in a gradient-like macroblock may be used as factor D as it is.

For pixels output sequentially from processing selection unit 1266, modulo operation unit 1278 performs a modulo operation on their pixel values using corresponding factor D as a modulus. More specifically, a minimum m with which a pixel value Value = $q \times D + m$ ($q \geq 0$, D>0) holds for each pixel is determined. Herein, q is a quotient, and m is a remainder.

Since "pixel value P = $k \times D + m$" is calculated in processing of reconstructing macroblocks (decoding) which will be described later, remainder m (Remainder) calculated for each pixel per color component is output.

A method for generating a gradient-like macroblock in gradient image generation unit 1270 will now be described. More specifically, gradient image generation unit 1270 generates a gradient-like macroblock indicating the degree of change on an image space, from a motion-compensated macroblock (intra-macroblock or inter-macroblock) serving as side information. The gradient-like macroblock refers to an image having a larger intensity in a region with a larger textural change in the motion-compensated macroblock. Any filtering process can be used as the processing of generating the gradient-like macroblock. The value of each pixel constituting the gradient-like macroblock is normalized so as to have any integer value within a predetermined range (e.g., 0 to 255). Typically, the gradient-like macroblock is generated by the following procedure.

(i) Apply Gaussian filtering to a gradient-like macroblock to remove noise (Gaussian smoothing).
(ii) Split filtered side information to color components (i.e., a gray scale image is generated for each color component).
(iii) Execute operations of (c1) to (c4) for the gray scale image of each color component.

(iii-1) Edge detection
(iii-2) Gaussian smoothing (once or more) (or Median filter)
(iii-3) a series of morphological operations (e.g., dilation (once or more), erosion (once or more), dilation (once or more))
(iii-4) Gaussian smoothing (once or more).

Through the operations as described above, a gradient-like macroblock is generated for each color component constituting a motion-compensated macroblock.

The procedure described herein is merely an example, and the details of processing, procedure and the like of Gaussian smoothing and morphological operations can be designed appropriately.

Furthermore, any method may be adopted as long as macroblocks can be generated in which a larger pixel value (intensity) is assigned to a region where a larger change in intensity has occurred within a motion-compensated macroblock. As an example, a sobel filter may be applied to each of x and y directions, and the average value of the application result may be used as a macroblock.

(h4: Data Format Conversion Unit 1206 (for Second Data Format))

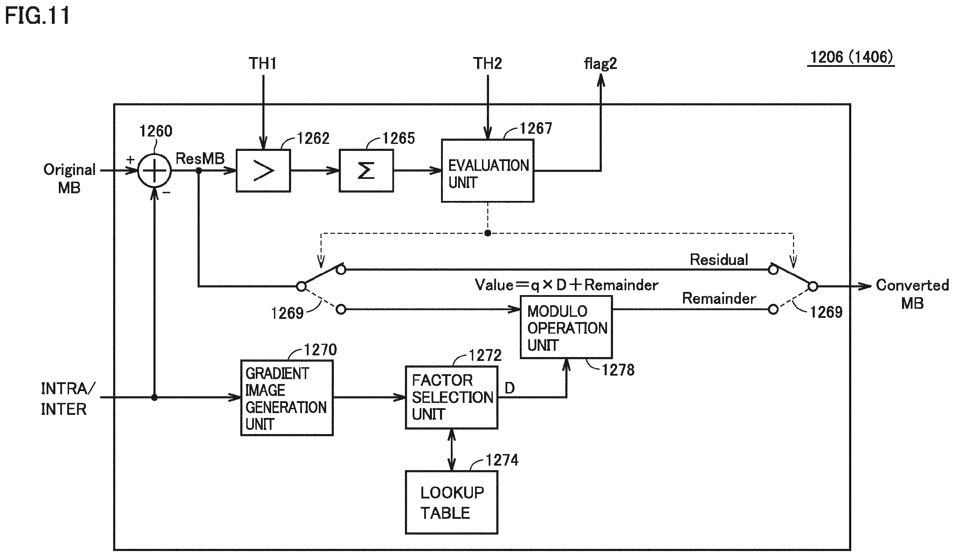

Fig. 11 is another functional block diagram of data format conversion unit 1206 according to the embodiment of the present invention. Referring to Fig. 11, data format conversion unit 1206 is provided with an integration unit 1265, an evaluation unit 1267 and a switching unit 1269 instead of mask generation unit 1264, processing selection unit 1266 and synthesis unit 1280, as compared with data format conversion unit 1206 shown in Fig. 9. The remaining components have been described above in detail, and the details thereof will not be repeated.

Comparison unit 1262, integration unit 1265 and evaluation unit 1267 determine by which of a residual and a remainder a target macroblock should be defined. That is, for each of blocks obtained by dividing a residual image (residual macroblock) into predetermined size, comparison unit 1262, integration unit 1265 and evaluation unit 1267 determine on a block basis a region which should be defined by a remainder based on a result of combining evaluations of pixel values of respective pixels constituting a block concerned. Evaluation unit 1267 outputs, as additional information, information for specifying a block defined by a remainder, among blocks included in a residual image.

More specifically, comparison unit 1262 compares the pixel value of each pixel constituting a residual macroblock and threshold value TH1 which is part of side information. Then, for a pixel whose pixel value exceeds threshold value TH1, comparison unit 1262 outputs the difference between the pixel value and threshold value TH1 to integration unit 1265. That is, for each residual macroblock, integration unit 1265 calculates the total sum of "pixel value - threshold value TH1" ($\Sigma$(pixel value - threshold value TH1)) for pixels whose pixel values exceed threshold value TH1.

Evaluation unit 1267 compares the calculated total sum with threshold value TH2, and determines by which of a residual and a remainder definition should be given for a target residual macroblock. Specifically, if the calculated total sum is more than or equal to threshold value TH2, evaluation unit 1267 determines that the target residual macroblock is output as it is. On the other hand, if the calculated total sum is less than threshold value TH2, evaluation unit 1267 determines that the target residual macroblock is output upon conversion into a remainder macroblock. That is, since information on a macroblock may be greatly lost if it is determined that a residual macroblock is composed of pixels of relatively small pixel values, conversion is made into a data format in which definition is given by a remainder, rather than a residual.

Furthermore, evaluation unit 1267 supplies an instruction to switching unit 1269 based on this determination. More specifically, when it is determined that the target residual macroblock is output as it is, switching unit 1269 enables a path for bypassing modulo operation unit 1278. On the other hand, when it is determined that the target residual macroblock is output upon conversion into a remainder macroblock, switching unit 1269 enables a path for supplying the residual macroblock to modulo operation unit 1278.

The additional information on this macroblock as to by which of a remainder and a residual definition is to be given is included in side information as flag "flag 2". Based on the value of flag "flag 2" received from mask generation unit 1264, the procedure to be applied to each macroblock in encoding and decoding is determined.

In the case of using a remainder macroblock as a macroblock after data format conversion, compression is performed in the form of lossy compression. Thus, when inversing this macroblock in local decoder 1210, processing in deblock filter 1216 (Fig. 4) may be bypassed. This can reduce production of noise.

[I. Processing in Orthogonal Transformation-Quantization Units 1208 and 1408]

Processing in orthogonal transformation-quantization units 1208 and 1408 according to the embodiment of the present invention will now be described in detail.

Orthogonal transformation-quantization units 1208 and 1408 each execute orthogonal transformation, quantization and scaling on macroblocks after data format conversion received from data format conversion units 1206 and 1406. The type of this orthogonal transformation and quantization may be dynamically changed in accordance with the data format type of macroblocks output from data format conversion units 1206 and 1406. For example, a technique similar to that used in the related art may be applied to a region defined by a residual, while parameters related to orthogonal transformation, quantization and scaling may further be adjusted for a region defined by a remainder.

[J. Processing in Data Format Reconversion Units 1214 and 1414]

Processing in data format reconversion units 1214 and 1414 according to the embodiment of the present invention will now be described in detail. It is noted that since the processing in data format reconversion units 1214 and 1414 is substantially identical, data format reconversion unit 1214 will be described below for ease of description.

(j1: Overview of Processing in Data Format Reconversion Unit 1214)

Since there are a plurality of types of macroblocks after data format conversion output from data format conversion unit 1206 as described above, the procedure of data format reconversion is selected based on the data format type included in side information.

For a region defined by a residual, data format reconversion unit 1214 inverts an original macroblock by adding a motion-compensated macroblock (intra-macroblock generated in intra-frame prediction unit 1218 or inter-macroblock generated in motion compensation unit 1220) in the same frame.

On the other hand, for a region defined by a remainder, a motion-compensated macroblock is also used as side information. More specifically, in order to determine a factor (denominator) for use in an inverse modulo operation for estimating an original pixel value from a remainder, a gradient-like macroblock for a motion-compensated macroblock or a macroblock containing information similar thereto is generated.

Although the first data format in which a remainder and a residual are combined on a pixel basis and the second data format in which a remainder and a residual are combined on a macroblock basis may be present for macroblocks after data format conversion as described above, similar data format reconversion (inverting processing) is basically applied to any macroblock. It is noted that, in the following description, it is obvious that data format reconversion (inverting processing) for macroblocks after data format conversion defined only by a remainder can be achieved by eliminating processing related to calculation of a residual.

(j2: Functional Configuration of Data Format Reconversion Unit 1214)

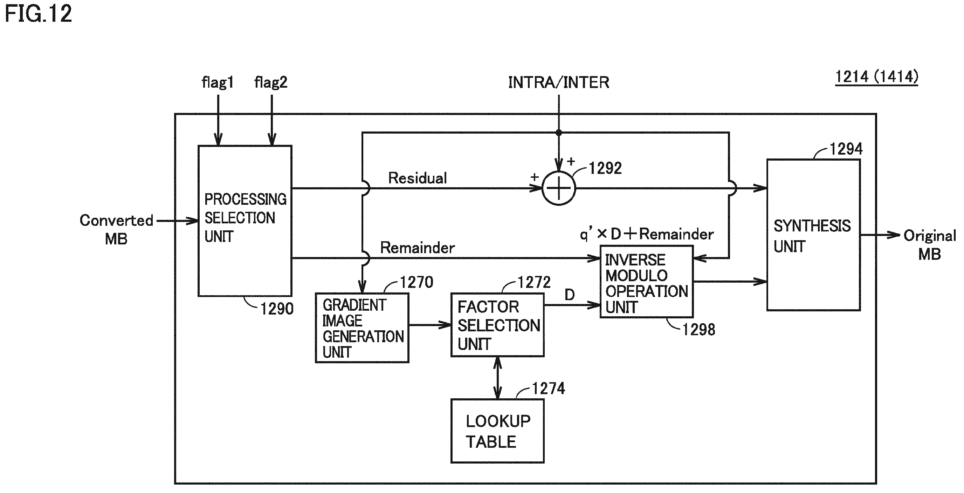

Fig. 12 is a functional block diagram of data format reconversion unit 1214 according to the embodiment of the present invention. Referring to Fig. 12, data format reconversion unit 1214 includes a processing selection unit 1290, an addition unit 1292, gradient image generation unit 1270, factor selection unit 1272, Lookup table 1274, an inverse modulo operation unit 1298, and a synthesis unit 1294. It is noted that components executing operations similar to those of the components constituting data format conversion unit 1206 shown in Fig. 9 are denoted by the same reference characters.

Based on flag "flag 1" and/or flag "flag 2" constituting part of side information, processing selection unit 1290 determines the data format type for macroblocks after data format conversion (inversed by inverse orthogonal transformation-scaling unit 1212), and specifies regions (pixels/macroblocks) defined by a remainder and a residual, respectively. Then, processing selection unit 1290 outputs a pixel value included in the region defined by a residual to addition unit 1292, and outputs a pixel value included in the region defined by a residual to inverse modulo operation unit 1298.

Addition unit 1292 adds the pixel value in a motion-compensated macroblock corresponding to a pixel location of a pixel whose pixel value has been output from processing selection unit 1290, to the output pixel value. Through this addition processing, a corresponding pixel value of an original macroblock is inverted. Addition unit 1292 outputs this calculation result to synthesis unit 1294.

On the other hand, inverse modulo operation unit 1298 estimates a corresponding pixel value of the original macroblock by an inverse modulo operation based on the pixel value (remainder) received from processing selection unit 1290 and factor D used when calculating that remainder. Factor D required for this inverse modulo operation is determined in accordance with processing similar to the processing of calculating a remainder in data format conversion unit 1206. That is, gradient image generation unit 1270 generates a gradient-like macroblock for a motion-compensated macroblock, and factor selection unit 1272 determines factor D for each pixel with reference to Lookup table 1274 based on the pixel value (gradient) of each pixel of the generated gradient-like macroblock. Since the operations performed by gradient image generation unit 1270, factor selection unit 1272 and Lookup table 1274 have been described with reference to Fig. 9, detailed description thereof will not be repeated.

Inverse modulo operation unit 1298 performs an inverse modulo operation using factor D and a remainder selected for each pixel, as well as a corresponding pixel value SI of a motion-compensated macroblock. More specifically, inverse modulo operation unit 1298 calculates a list of candidate values $C(q')$ for a corresponding pixel value of an original macroblock in accordance with the expression $C(q') = q' \geq D + \text{Remainder}$ (where $q' \geq 0$, $C(q') < 256$), and among these calculated candidate values $C(q')$, one with the smallest difference from corresponding pixel value SI of a motion-compensated macroblock is determined as a corresponding pixel value of an original macroblock.

For example, considering the case where factor D = 8, remainder m = 3, and corresponding pixel value SI of a motion-compensated macroblock is equal to 8, candidate values $C(q')$ are obtained as follows:

$$\text{Candidate value } C(0) = 0 \times 8 + 3 = 3 \qquad (\text{difference from SI} = 5)$$

$$\text{Candidate value } C(1) = 1 \times 8 + 3 = 11 \qquad (\text{difference from SI} = 3)$$

$$\text{Candidate value } C(2) = 2 \times 8 + 3 = 19 \qquad (\text{difference from SI} = 11)$$

…

...

Among these candidate values C(q'), candidate value C(1) with the smallest difference from corresponding pixel value SI of a motion-compensated macroblock is selected, and the corresponding pixel value of an original macroblock is determined as "11". The pixel value of each pixel of an original macroblock is thereby determined by each color component. This calculated pixel value is output to synthesis unit 1294. Synthesis unit 1294 combines remainders or residuals received for respective pixels, and outputs an original macroblock (Original MB).

[K. Functional Configuration of Decoder Group]

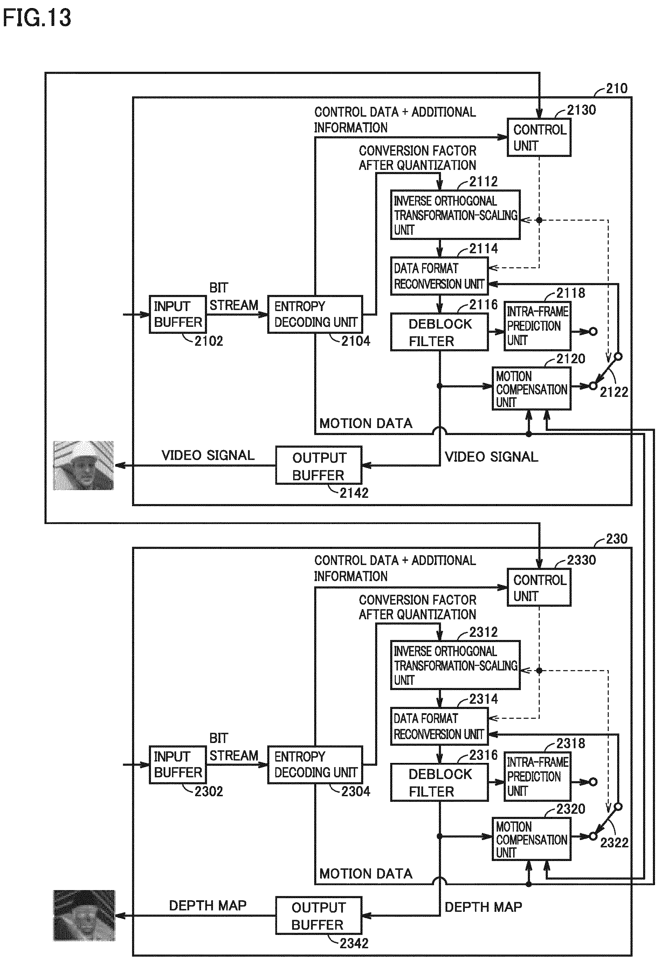

A functional configuration of a decoder group constituting the encoding/decoding system according to the embodiment of the present invention will be described. Fig. 13 is a functional block diagram of a decoder group according to the embodiment of the present invention. Referring to Fig. 13, in decoding according to the embodiment of the present invention, a bit stream in which multi-view video and corresponding multi-view depth maps have been encoded is processed. Thus, decoder 210 decodes multi-view video, and decoder 230 decodes multi-view depth maps. Decoders 210 and 230 perform decoding while sharing information between each other. Decoders 210 and 230 have a common basic configuration.

A functional block diagram of decoder 210 for decoding multi-view video is shown. Referring to Fig. 13, decoder 210 includes an input buffer 2102, an entropy decoding unit 2104, an inverse orthogonal transformation-scaling unit 2112, a data format reconversion unit 2114, a deblock filter 2116, an intra-frame prediction unit 2118, a motion compensation unit 2120, a switching unit 2122, a control unit 2130, and an output buffer 2142.

On the other hand, decoder 230 for decoding multi-view depth maps includes an input buffer 2302, an entropy decoding unit 2304, an inverse orthogonal transformation-scaling unit 2312, a data format reconversion unit 2314, a deblock filter 2316, an intra-frame prediction unit 2318, a motion compensation unit 2320, a switching unit 2322, a control unit 2330, and an output buffer 2342.

In summary, decoder 210 is different from decoder 910 shown in Fig. 5 mainly in that data format reconversion unit 2114 is provided instead of addition unit 9114 for adding a residual image and a predicted image previously calculated (interpolation information). Similarly, decoder 230 is different from decoder 930 shown in Fig. 5 mainly in that data format reconversion unit 2314 is provided instead of addition unit 9314 for adding a residual image and a predicted image previously calculated (interpolation information). In association with this change in configuration, the operations of control unit 2130 also differ from those of control unit 9130. In association with these changes in configuration, the operations of control units 2130 and 2330 also differ from those of control unit 9130 and 9330.

Furthermore, in connection with information sharing between decoders 210 and 230, operations in motion compensation units 2120 and 2320 also differ from those of motion compensation units 9120 and 9320, respectively.

On the other hand, the functions of input buffers 2102 and 2302, entropy decoding units 2104 and 2304, inverse orthogonal transformation-scaling units 2112 and 2312, deblock filters 2116 and 2316, intra-frame prediction units 2118 and 2318, motion compensation units 2120 and 2320, switching units 2122 and 2322, as well as output buffers 2142 and 2342 are similar to those of input buffers 9102 and 9302, entropy decoding units 9104 and 9304, inverse orthogonal transformation-scaling units 9112 and 9312, deblock filters 9116 and 9316, intra-frame prediction units 9118 and 9318, motion compensation units 9120 and 9320, switching units 9122 and 9322, as well as output buffers 9142 and 9342 shown in Fig. 5.

[L. Procedure in Decoders 210 and 230]

The procedure in decoders 210 and 230 will now be described. Referring to Fig. 13, a bit stream obtained by encoding video is supplied to input buffer 2102, and a bit stream obtained by encoding corresponding depth maps is supplied to input buffer 2302. The embodiment of the present invention is suitable for a bit stream obtained by encoding MVD composed of multi-view video and corresponding multi-view depth maps, but is also applicable to a bit stream obtained by encoding single-view video captured with single camera 10 and a corresponding depth map.

Input buffer 2102 temporarily stores a bit stream obtained by encoding video. Similarly, input buffer 2302 temporarily stores a bit stream obtained by encoding a depth signal.

Entropy decoding unit 2104 performs entropy decoding on the bit stream received from input buffer 2102, and as a result, outputs motion data, a conversion factor after quantization as well as control data and additional information. The motion data is supplied to motion compensation unit 2120. Similarly, entropy decoding unit 2304 performs entropy decoding on the bit stream received from input buffer 2302, and as a result, outputs motion data, a conversion factor after quantization as well as control data and additional information. The motion data is supplied to motion compensation unit 2320.

Inverse orthogonal transformation-scaling units 2112 and 2312 execute inverse orthogonal transformation (typically, discrete Fourier inverse transform) and scaling on the conversion factors after quantization decoded by entropy decoding units 2104 and 2304, respectively. Macroblocks after data format conversion are inverted by these operations.

Data format reconversion is executed on the macroblocks after data format conversion by data format reconversion unit 2114, and upon receipt of the result, deblock filter 2116 smoothes the block boundary so as to suppress occurrence of block noise. Original video is inverted by these operations. Similarly, data format reconversion is executed on the macroblocks after data format conversion by data format reconversion unit 2314, and upon receipt of the result, deblock filter 2316 smoothes the block boundary so as to suppress occurrence of block noise. Original depth maps are inverted by these operations.

Intra-frame prediction units 2118 and 2318 generate predicted images based on adjacent macroblocks.

There are connections provided between decoders 210 and 230 which indicate what types of information are shared therebetween.

Motion compensation unit 2120 of decoder 210 shares motion data about video decoded from a bit stream with motion compensation unit 2320 of decoder 230. Similarly, motion compensation unit 2320 of decoder 230 shares motion data about video decoded from a bit stream with motion compensation unit 2120 of decoder 210. This motion data from the other decoder is used for calculating motion data in each of motion compensation units 2120 and 2320. More specifically, motion compensation unit 2120 generates a predicted image using inter-frame prediction. More specifically, each of motion compensation units 2120 and 2320 generates a predicted image based on inverted original macroblocks and motion data about each of inverted video and depth maps.

Either of the predicted images generated by intra-frame prediction unit 2118 and motion compensation unit 2120, respectively, is selected appropriately by switching unit 2122 for supply to data format reconversion unit 2114. Similarly, either of the predicted images generated by intra-frame prediction unit 2318 and motion compensation unit 2320, respectively, is selected appropriately by switching unit 2322 for supply to data format reconversion unit 2314.

Control unit 2130 controls operations in inverse orthogonal transformation-scaling unit 2112, data format reconversion unit 2114 and switching unit 2122 based on the control data and parameters inverted by entropy decoding unit 2104. Similarly, control unit 2330 controls operations in inverse orthogonal transformation-scaling unit 2312, data format reconversion unit 2314 and switching unit 2322 based on the control data and parameters inverted by entropy decoding unit 2304.

Control units 2130 and 2330 exchange several pieces of control data in order to share information as described above. Integrative coding of MVD can thus be achieved.

Output buffer 2142 temporarily stores the original video inverted from deblock filter 2116, and output buffer 2342 temporarily stores the original depth maps inverted from deblock filter 2316.

[M. Additional Information]

Additional information including parameters, side information and the like used in the encoding/decoding system according to the embodiment of the present invention will now be described in detail.

In the encoding/decoding system according to the embodiment of the present invention, information that defines a pixel value is changed between a remainder and a residual in encoding. Therefore, parameters concerning data format conversion, such as flags "flag 1" and "flag 2", type "type", threshold values TH1 and TH2, and a remainder operation parameter "a", are used as additional information required for such control.

Furthermore, in the embodiment of the present invention, for encoder 120 for processing multi-view video and encoder 140 for processing multi-view depth maps to execute encoding while sharing information therebetween, parameters, such as flags "flag 3" and "flag 4", are used as additional information required for encoding in which such information is shared.

(m1 : Parameter for Data Format Conversion)

Flag "flag 1" and/or flag "flag 2" are/is used to specify a region to be defined by a remainder in macroblocks after data format conversion. In other words, by disabling both of flag "flag 1" and flag "flag 2", it is specified that all the regions are to be defined by residuals. In such a case where all the regions are to be defined by residuals, that is, data format conversion is not carried out, encoder 120 (more specifically, control unit 1230) and decoder 210 (more specifically, control unit 2130) perform operations in conformance with a standard such as MPEG-4 AVC, for example.

On the other hand, in the case where data format conversion according to the embodiment of the present invention is carried out, type "type", threshold values TH1 and TH2 as well as remainder operation parameter "a" are used in addition to above-described flags "flag 1" and "flag 2".

Type "type" corresponds to a parameter indicating which of the first data format (Fig. 8 (a)) in which a remainder and a residual are combined on a pixel basis and the second data format (Fig. 8 (b)) in which a remainder and a residual are combined on a macroblock basis has been selected.

Since type "type" only needs to specify which data format has been selected, it is sufficient that information on a single bit (1 bit) be assigned. The following parameters are used in accordance with the data format selected.

(i) First Data Format (Fig. 8 (a))

«Flag "flag 1 "»

Flag "flag 1" is assigned to each pixel constituting a macroblock, and each flag "flag 1" indicates by which of a remainder and a residual a corresponding pixel is to be defined. As an alternative configuration, by assigning flag "flag 1" to only one of a remainder and a residual and not assigning flag "flag 1" to the other one, it can be specified by which of a remainder and a residual each pixel is to be defined.

«Threshold Value TH1»

Threshold value TH1 is used as an evaluation criterion for determining by which of a remainder and a residual each of a plurality of pixels constituting each macroblock should be defined. That is, threshold value TH1 is an evaluation criterion for specifying a region whose pixel value should be defined by a remainder, among pixels constituting a residual image (residual macroblock), and this threshold value TH1 is transmitted to the decoder side as additional information.

«Remainder Operation Parameter "a"»

Remainder operation parameter "a" is a parameter for determining factor D for use in modulo operation unit 1278 (Fig. 9). As an example, a threshold value for a gradient-like macroblock generated in gradient image generation unit 1270 (Fig. 9) may be used as remainder operation parameter "a". That is, a threshold value which determines each gradation in Lookup table 1274 as shown in Fig. 10 will be remainder operation parameter "a".

Alternatively, a plurality of Lookup tables as shown in Fig. 10 may be prepared, and an identifier indicating which Lookup table is to be selected may be used as remainder operation parameter "a".

(ii) First Data Format (Fig. 8 (b))

«Flag "flag 2"»

Flag "flag 2" is assigned to each pixel constituting a macroblock, and each flag "flag 2" indicates by which of a remainder and a residual a corresponding macroblock is to be defined. As an alternative configuration, by assigning flag "flag 2" to only one of a remainder and a residual and not assigning flag "flag 2" to the other one, it can be specified by which of a remainder and a residual each macroblock is to be defined.

«Threshold Value TH2»

Threshold value TH2 is used as an evaluation criterion for determining by which of a remainder and a residual each macroblock should be defined. Threshold value TH1 is also used in this determination.

«Remainder Operation Parameter "a"»

Similarly to remainder operation parameter "a" used for the above-described first data format, remainder operation parameter "a" includes a threshold value for a gradient-like macroblock or an identifier indicating which Lookup table used is to be selected.

It is noted that rate-distortion optimization may be executed in encoder 120. At this time, it is preferable that threshold value TH1 and/or threshold value TH2 for determining by which of a remainder and a residual definition should be given be also subjected to this optimization. By this optimization, performance can be improved more.

(m2: Parameter for Information Sharing between Encoders)

<<Flag "flag 3" (having different meanings between encoders 120 and 140)>>

Each of encoders 120 and 140 uses flag "flag 3" indicating the details of processing for each encoder.
Flag "flag 3" in encoder 120 for executing encoding of video indicates whether or not a corresponding depth map (output from division unit 1404 of Fig. 6) is used in estimation of motion data about video (multi-view video) in motion estimation unit 1240 (Fig. 6).
Flag "flag 3" in encoder 140 for executing encoding of depth maps indicates whether or not motion data about corresponding video (output from motion estimation unit 1240 of Fig. 6) is used in estimation of motion data about a depth map (multi-view depth map) in motion estimation unit 1440 (Fig. 6).

<<Flag "flag 4" (used in Encoder 120)>>

When a corresponding depth map is used in estimation of motion data about video in motion estimation unit 1240 (Fig. 6) (indicated by above-described flag "flag 3 "), flag "flag 4" in encoder 120 for executing encoding of video indicates how it is used. That is, flag "flag 4" indicates either processing is executed: (i) outputting a corresponding depth map itself as estimated motion data; and (ii) treating a corresponding depth map as an initial value of estimated motion data, and further, upon making adjustment using information on video and the like, outputting it as final motion data.

(m3: Parameter for Information Sharing between Decoders)

In decoder 210, flags "flag 3" and "flag 4" are used, and in decoder 230, flag "flag 3" is used.
Flag "flag 3" treated in decoders 210 and 230 indicates whether motion data is shared. Flag "flag 4" treated in decoder 210 indicates whether a corresponding depth map is used in estimation of motion data about video (multi-view video).

[N. Hardware Configuration]

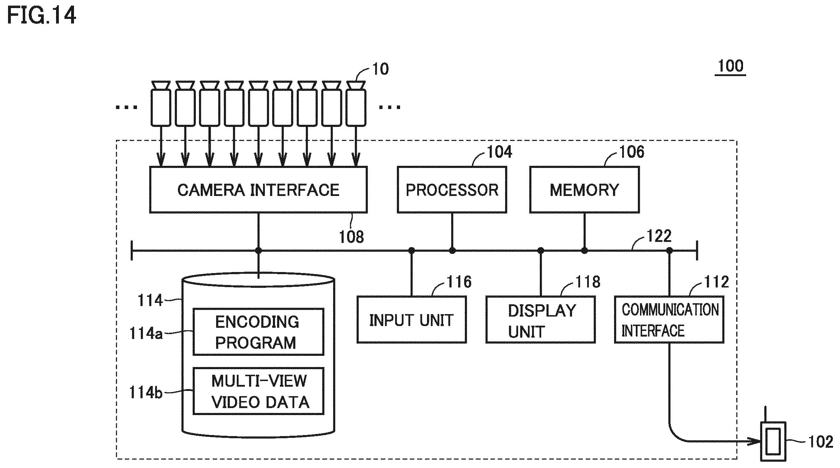

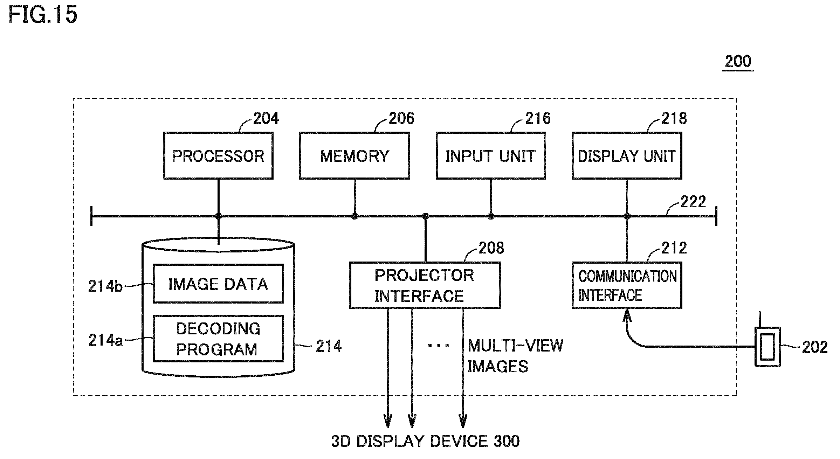

Next, an exemplary configuration of hardware for achieving the sender and receiver as described above will be described. Fig. 14 is a schematic view showing a hardware configuration of information processing apparatus 100 functioning as a sender. Fig. 15 is a schematic view showing a hardware configuration of information processing apparatus 200 functioning as a receiver.
Referring to Fig. 14, information processing apparatus 100 includes a processor 104, a memory 106, a camera interface 108, a communication interface 112, a hard disk 114, an input unit 116, and a display unit 118. These respective components are configured to be capable of making data communications with one another through a bus 122.
Processor 104 reads a program stored in hard disk 114 or the like, and expands the program in memory 106 for execution, thereby achieving the encoding process according to the embodiment of the present invention. Memory 106 functions as a working memory for processor 104 to execute processing.
Camera interface 108 is connected to plurality of cameras 10, and acquires images captured by respective cameras 10. The acquired images may be stored in hard disk 114 or memory 106. Hard disk 114 holds, in a nonvolatile manner, an encoding program 114a for achieving the above-described encoding process, multi-view video data 114b received from camera interface 108, and the like.
Input unit 116 typically includes a mouse, a keyboard and the like to accept user operations. Display unit 118 informs a user of a result of processing and the like.
Communication interface 112 is connected to wireless transmission device 102 and the like, and outputs data output as a result of processing executed by processor 104, to wireless transmission device 102.
Referring to Fig. 12, information processing apparatus 200 includes a processor 204, a memory 206, a projector interface 208, a communication interface 212, a hard disk 214, an input unit 216, and a display unit 218. These respective components are configured to be capable of making data communications with one another through a bus 222.
Processor 204, memory 206, input unit 216, and display unit 218 are similar to processor 104, memory 106, input unit 116, and display unit 118 shown in Fig. 11, respectively, and therefore, a detailed description thereof will not be repeated.
Projector interface 208 is connected to 3D display device 300 to output multi-view video inverted by processor 204 and the like to 3D display device 300.
Communication interface 212 is connected to wireless transmission device 202 and the like to receive a bit stream transmitted from information processing apparatus 100 and output the bit stream to bus 222.
Hard disk 214 holds, in a nonvolatile manner, a decoding program 214a for achieving decoding and image data 214b containing inverted original images.

The hardware itself and its operation principle of each of information processing apparatuses 100 and 200 shown in Figs. 14 and 15, respectively, are common. The essential part for achieving encoding/decoding according to the embodiment of the present invention is software (instruction codes), such as encoding program 114a and decoding program 214a stored in storage media such as a hard disk, or the like. Such encoding program 114a and decoding program 214a are distributed upon storage in a storage medium, such as an optical storage medium, a magnetic storage medium or a semiconductor storage medium. The storage medium for storing such programs may also be included in the scope of the invention of the present application.

Encoding program 114a and/or decoding program 214a may be implemented such that processing is executed using modules offered by OS (Operating System). In this case, encoding program 114a and/or decoding program 214a will not include some modules. Such a case, however, is also included in the technical scope of the invention of the present application.

All or some of functions of information processing apparatus 100 and/or information processing apparatus 200 may be implemented by using a dedicated integrated circuit such as ASIC (Application Specific Integrated Circuit) or may be implemented by using programmable hardware such as FPGA (Field-Programmable Gate Array) or DSP (Digital Signal Processor).

[O. Other Embodiments]

In the embodiment of the present invention, by applying threshold values to residual macroblocks obtained by subtracting motion-compensated macroblocks (intra-macroblocks or inter-macroblocks) from original macroblocks, regions to be defined by a remainder and a residual, respectively, are determined. These threshold values and other parameters required for data format conversion may be optimized dynamically or statically using a speed optimization loop.

In the embodiment of the present invention, a modulo operation is performed in order to calculate a remainder. Factor D used as a denominator (modulus) in this modulo operation is determined based on a gradient image of a motion-compensated macroblock (or motion-compensated frame) identical to a target macroblock. This gradient image (gradient(-like) macroblock or gradient(-like) frame) is generated from an intra-macroblock (or intra-frame) or an inter-macroblock (or inter-frame). At this time, the gradient may be calculated among macroblocks of a plurality of frames. That is, a gradient image may be calculated throughout the time domain and/or the spatial domain. Factor D for use in a modulo operation is determined in accordance with the gradient image thus calculated.

In the embodiment of the present invention, factor D for use in a modulo operation may be set equal to a threshold value applied to a gradient(-like) macroblock (or gradient frame) for determining by which of a remainder and a residual each region should be defined.

Although the above-described embodiment describes, as a data format for a macroblock or a frame, (1) the data format in which each region is defined only by a remainder, and (2) the data format in which each region is defined by the combination of a remainder and a residual, another data format can also be employed. Therefore, a macroblock or a frame may include various components, such as all zero, a combination of residuals and zero, all residuals, a combination of remainders and zero, all remainders, a combination of remainders and residuals, and a combination of remainders, residuals and zero.

The above-described embodiment shows a configuration example suited to MPEG-4 AVC, one of the video compression standards. In this configuration example, the processing of data compression after data format conversion is executed by the procedure pursuant to the standard. On the other hand, the processing of data format conversion is optimized in accordance with parameters related to data compression. In the final stage of encoding, any data compression tool may also be applied to images/video/multi-view video.

Also in decoding processing (i.e., data inverting processing), a decoder in accordance with the data format according to the embodiment of the present invention is used. For example, information on the data format type ("type") is transmitted from the encoder to the decoder. By adding such information, compatibility with conventional apparatuses and the existing standards can be ensured. When data of the data format in which remainders and residuals are combined is transmitted, the bit stream includes parameters related to coding and parameters related to the data format, in addition to parameters required by the standard.

In decoding, a region defined by a residual may further be compensated based on a motion-compensated macroblock/frame or a synthesized macroblock/frame.

A corresponding value of a motion-compensated macroblock/frame may be assigned to a region set at zero. A region defined by a remainder is inverted by an inverse modulo operation as described above.

The above-described embodiment shows the application example to the encoding/decoding system for lossy compression, but is also applicable to an encoding/decoding system for lossless compression. In this case, orthogonal transformation-quantization units 1208, 1408 and inverse orthogonal transformation-scaling units 1212, 1412 shown in Fig. 6, inverse orthogonal transformation-scaling units 2112, 2312 shown in Fig. 13, and the like will be unnecessary. That is, processing which causes data loss, such as orthogonal transformation or quantization, will not be executed in encoding.

According to the embodiment of the present invention, a method for data format conversion of images as well as integrative coding of images and depth images, used in data compression processing of images, is provided. This method includes the step of performing data compression on a sequence of multi-view video/images captured with a sequence of cameras or Depth cameras or image data of any form, by means of a coding tool obtained by improving the existing standards (an improved data compression tool for images/video/multi-view video). Here, data format conversion is executed per block (macroblock) composed of a plurality of pixels.

Here, processing of data format conversion includes the steps of:

(1a) converting a block data format of each pixel into any of a remainder, a residual and zero in accordance with a set of predetermined parameters based on an inter-block (block coded using any of forward prediction, backward prediction and bi-directional prediction) or intra-block and an original block at a corresponding position;

(1b) generating a difference block, namely, a residual block based on an inter-block or intra-block and an original block;

(1c) enabling a flag for a pixel whose value has been determined that it should be converted into a remainder, based on the set of predetermined parameters and a residual block;

(1d) converting the values of pixels which have been determined to be set at zero based on the set of predetermined parameters and a residual macroblock into zero (these pixels are treated as pixels in which residuals are zero);

(1e) generating a gradient-like image based on an inter-macroblock or intra-macroblock;

(If) setting parameters for determining a remainder by a modulo operation, based on the gradient-like image;

(1g) converting, into a remainder, a pixel whose value has been determined that it should be changed into a remainder, based on an original block and a set of parameters having been set for a modulo operation;

(1h) subjecting a new block after data format conversion to processing for data compression similar to that of the existing standards for data compression on images/video/multi-view video;

(1i) adding parameters for data format conversion to the optimization processing in conformance with the standard, and executing data compression with the parameters; and

(1j) executing optimization processing on data compression parameters in conformance with the standard of the new data format and the parameters for data format conversion using existing optimization processing, thereby increasing compression efficiency and compression quality thereof.

Next, the process of integrative data compression includes the steps of:

(2a) replacing motion data for image coding by a depth map;

(2b) further adjusting motion data for improvement in the case of using the depth map as an initial value of an estimation result in the motion estimation unit in the video encoder;

(2c) using the motion estimation result in the depth map encoder instead of motion data in the video encoder;

(2d) using the motion estimation result in the video encoder instead of motion data in the depth map encoder; and

(2e) transmitting corresponding parameters indicating the type of shared information to a decoder.

Next, the process of data format reconversion includes the following steps:

(3a) providing a data inversion tool with a bit stream of data compressed using an improved data compression tool for images/video/multi-view video, information on each compressed block, and corresponding parameters for data format reconversion;

(3b) inverting an original pixel value from a residual for an image for which a flag has not been enabled, based on an inter-macroblock or intra-macroblock as well as residual pixels and zero pixels; and

(3c) executing an inverse modulo operation based on an inter-macroblock or intra-macroblock and pixels of a remainder indicated by a flag (in execution of the inverse modulo operation, corresponding parameters for a modulo operation extracted from a received bit stream are used).

Finally, the process of integrative data inversion includes the following steps:

(4a) transmitting motion data for complex processing to each encoder depending on the type of motion data being shared between the video encoder and the depth map encoder; and

(4b) identifying the type of shared information using control data for decoding contained in the bit stream.

Although the above description shows the case where data format conversion and data format reconversion are executed on a macroblock basis, it is needless to say that it is applicable to the entire image. Specifically, residual images for the entire original image may be generated first, and the generated residual images may be subjected to the above-described processing on an image basis.

[P. Advantages]

Since the encoding/decoding system according to the embodiment of the present invention can maintain compatibility with the existing compression standards, incorporation of new data format conversion (encoding) according to the embodiment of the present invention can be facilitated. As described above, in the encoding/decoding system according to the embodiment of the present invention, processing identical to processing with the existing standards can also be achieved if information on remainders is not used. Therefore, compatibility can be maintained.

The encoding/decoding system according to the embodiment of the present invention is applicable to various types of image systems for a distributed source coding, distributed video coding, data compression on images/video/multi-view video, and the like, for example.

With the encoding/decoding system according to the embodiment of the present invention, data compression efficiency can be improved further by using a new data format within the range of the existing standards related to data compression on images/video/multi-view video.

In implementation of the encoding/decoding system according to the embodiment of the present invention, only a slight modification is needed to the data compression tool for images/video/multi-view video in alignment with the existing standards. Moreover, by disabling the processing according to the embodiment of the present invention, the data compression tool for images/video/multi-view video in which the encoding/decoding system according to the embodiment of the present invention is mounted can still maintain compatibility with the existing standards.

The encoding/decoding system according to the embodiment of the present invention codes multi-view video and multi-view depth maps in an integrative manner. Particularly, integrative coding of MVD can be achieved by causing encoders 120 and 140 to share motion data and depth maps about video, and the total data size after data compression of MVD can thereby be reduced to the same level as shared information or below.

It should be understood that the embodiment disclosed herein is illustrative and non-restrictive in every respect. The scope of the present invention is defined by the claims not by the description above, and is intended to include any modification within the meaning and scope equivalent to the terms of the claims.

REFERENCE SIGNS LIST

1 3D displays reproduction system; 2 object; 10 camera; 100, 200 information processing apparatus; 102, 202 wireless transmission device; 104, 204 processor; 106,206 memory; 108 camera interface; 110 preprocessor; 112,212 communication interface; 114, 214 hard disk; 114a encoding program; 116, 216 input unit; 118, 218 display unit; 120, 140, 820, 840 encoder; 122, 222 bus; 208 projector interface; 210, 230, 910, 930 decoder; 214a decoding program; 214b image data; 240 postprocessor; 300 3D display device; 302 projector array; 310 display screen; 312 diffusion film; 314 condenser lens; 1202, 1402, 2102, 2302, 8202, 8402, 9102 input buffer; 1204, 1404, 8204, 8404 division unit; 1206, 1406 data format conversion unit; 1208, 1408, 8208, 8408 orthogonal transformation-quantization unit; 1210, 1410, 8210, 8410 local decoder; 1212, 1412, 2112, 2312, 8212, 8412, 9112 inverse orthogonal transformation-scaling unit; 1214, 1414, 2114, 2314 data format reconversion unit; 1216, 1416, 2116, 2316, 8216, 8416, 9116 deblock filter; 1218, 1418, 2118, 2318, 8218, 8418, 9118 intra-frame prediction unit; 1220, 1420, 2120, 2320, 8220, 8420, 9120 motion compensation unit; 1222, 1269, 1422, 2122, 2322, 8222, 8422, 9122 switching unit; 1230, 1430, 2130, 2330, 8230, 8430, 9130 control unit; 1240, 1440, 8240, 8440 motion estimation unit; 1242, 1442, 2142, 2342, 8242, 8442, 9142 output buffer; 1250, 1450, 8250, 8450 entropy coding unit; 1260, 8206, 8406 subtraction unit; 1262 comparison unit; 1264 mask generation unit; 1265 integration unit; 1266, 1290 processing selection unit; 1267 evaluation unit; 1270 gradient image generation unit; 1272 factor selection unit; 1274 Lookup table; 1278 modulo operation unit; 1280, 1294 synthesis unit; 1292, 8214, 8414, 9114, 9314 addition unit; 1298 inverse modulo operation unit; 2104, 2304, 9104 entropy decoding unit.

**Claims**

**1.** A method for encoding a plurality of input images, comprising the steps of:

obtaining a plurality of first input images each containing first information on an object and a plurality of second input images each containing second information on the object, the plurality of second input images corresponding to the plurality of first input images, respectively, the second information being different from the first information;

for one of the first input images, calculating a first predicted image from information contained in at least one of another one of the first input images and a corresponding one of the second input images;

generating a first residual image from a difference between the one of the first input images and the corresponding first predicted image;

specifying a region whose pixel value should be defined by a remainder, among pixels constituting the first residual image, based on a pixel value of the first residual image;

converting, into a remainder, the pixel value included in the specified region of the first residual image which should be defined by a remainder;

for one of the second input images, calculating a second predicted image from information contained in at least one of another one of the second input images and a corresponding one of the first input images;

generating a second residual image from a difference between the one of the second input images and the corresponding second predicted image;

specifying a region whose pixel value should be defined by a remainder, among pixels constituting the second residual image, based on a pixel value of the second residual image;

converting, into a remainder, the pixel value included in the specified region of the second residual image which should be defined by a remainder; and

encoding the first residual image after the conversion, the second residual image after the conversion, and additional information specifying the region which should be defined by a remainder in each of the first residual image and the second residual image.

2. The method according to claim 1, wherein the step of converting into a remainder includes steps of
executing a modulo operation on the pixel value for the region which should be defined by a remainder,
obtaining gradient information on the predicted images, and
with reference to a predetermined correspondence between a gradient and a value for use as a modulus in the modulo operation, determining the value for use as a modulus in the modulo operation based on the obtained gradient information.

3. The method according to claim 1 or 2, wherein the step of calculating a first predicted image includes a step of calculating the first predicted image using one of the second input images corresponding to one of the first input images which is a target of calculation and one or more previous first input images.

4. The method according to any one of claims 1 to 3, wherein
the step of calculating a second predicted image includes a step of calculating the second predicted image using motion data on one of the first input images corresponding to one of the second input images which is a target of calculation, and
the motion data on the one of the first input images indicates a change component between a previous first input image and the one of the first input images which is a target of calculation.

5. The method according to any one of claims 1 to 3, wherein the step of calculating a second predicted image includes a step of calculating the second predicted image using one of the second input images which is a target of calculation and one or more previous second input images.

6. A storage medium having a program stored thereon for encoding a plurality of input images, the program causing a computer to perform the steps of:

obtaining a plurality of first input images each containing first information on an object and a plurality of second input images each containing second information on the object, the plurality of second input images corresponding to the plurality of first input images, respectively, the second information being different from the first information;

for one of the first input images, calculating a first predicted image from information contained in at least one of another one of the first input images and a corresponding one of the second input images;

generating a first residual image from a difference between the one of the first input images and the corresponding first predicted image;

specifying a region whose pixel value should be defined by a remainder, among pixels constituting the first residual image, based on a pixel value of the first residual image;

converting, into a remainder, the pixel value included in the specified region of the first residual image which should be defined by a remainder;

for one of the second input images, calculating a second predicted image from information contained in at least one of another one of the second input images and a corresponding one of the first input images;

generating a second residual image from a difference between the one of the second input images and the corresponding second predicted image;

specifying a region whose pixel value should be defined by a remainder, among pixels constituting the second residual image, based on a pixel value of the second residual image;

converting, into a remainder, the pixel value included in the specified region of the second residual image which should be defined by a remainder; and

encoding the first residual image after the conversion, the second residual image after the conversion, and additional information specifying the region which should be defined by a remainder in each of the first residual image and the second residual image.

7. An apparatus for encoding a plurality of input images, comprising:

means for obtaining a plurality of first input images each containing first information on an object and a plurality of second input images each containing second information on the object, the plurality of second input images corresponding to the plurality of first input images, respectively, the second information being different from the first information;

for one of the first input images, means for calculating a first predicted image from information contained in at least one of another one of the first input images and a corresponding one of the second input images;

means for generating a first residual image from a difference between the one of the first input images and the corresponding first predicted image;

means for specifying a region whose pixel value should be defined by a remainder, among pixels constituting the first residual image, based on a pixel value of the first residual image;

means for converting, into a remainder, the pixel value included in the specified region of the first residual image which should be defined by a remainder;

for one of the second input images, means for calculating a second predicted image from information contained in at least one of another one of the second input images and a corresponding one of the first input images;

means for generating a second residual image from a difference between the one of the second input images and the corresponding second predicted image;

means for specifying a region whose pixel value should be defined by a remainder, among pixels constituting the second residual image, based on a pixel value of the second residual image;

means for converting, into a remainder, the pixel value included in the specified region of the second residual image which should be defined by a remainder; and

means for encoding the first residual image the after conversion, the second residual image the after conversion, and additional information specifying the region which should be defined by a remainder in each of the first residual image and the second residual image.

FIG.1

REAL OBJECTS

CAMERA ARRAY

**100** SENDER

PREPROCESSOR — 110

VIDEO SIGNAL

ENCODER

DATA FORMAT CONVERSION + DATA COMPRESSIN

120 INFORMATION SHARING

DEPTH MAP

ENCODER

DATA FORMAT CONVERSION + DATA COMPRESSIN

140

TRANSMISSION

**200** RECEIVER

DECODER

DATA FORMAT RECONVERSION + DATA INVERSION

210 INFORMATION SHARING

230

DECODER

DATA FORMAT RECONVERSION + DATA INVERSION

VIDEO SIGNAL

DEPTH MAP

POST-PROCESSOR

240

PROJECTOR ARRAY302

300

DISPLAYED OBJECTS

310
314
312

EP 2 981 083 A1

# FIG.2

Block diagram (820):

- INPUT SOURCE → VIDEO SIGNAL → INPUT BUFFER (8202) → DIVISION UNIT (8204) — DIVISION INTO MACROBLOCKS (N×N PIXELS)
- CONTROL UNIT (8230) → CONTROL DATA
- Adder (8206): + (from division unit), − (from PREDICTED IMAGE) → ORTHOGONAL TRANSFORMATION–QUANTIZATION UNIT (8208) → CONVERSION FACTOR AFTER QUANTIZATION
- LOCAL DECODER (8210): INVERSE ORTHOGONAL TRANSFORMATION–SCALING UNIT (8212) → Adder (8214) → DEBLOCK FILTER (8216) → INTRA-FRAME PREDICTION UNIT (8218), MOTION COMPENSATION UNIT (8220), INTRA/INTER switch (8222)
- ENTROPY CODING UNIT (8250) → BIT STREAM
- MOTION ESTIMATION UNIT (8240) — MOTION DATA
- OUTPUT BUFFER (8242) → VIDEO SIGNAL
- VIDEO SIGNAL

EP 2 981 083 A1

FIG.3

# FIG.4

INFORMATION SHARING

# FIG.5

## FIG.6

FIG.7

(a) [MULTI-VIEW VIDEO]

TIME DOMAIN
(FRAME ORDER)

T0    T1    T2    T3    T4    T5 ⋯

S0    I    B    B    B    B    B    ⋯

S1    B    B    B    B    B    B    ⋯

S2    P    B    B    B    B    B    ⋯

S3    B    B    B    B    B    B    ⋯

SPATIAL
DOMAIN
(ARRANGEMENT
ORDER)

(i)(ii)REFLECT DEPTH MAP (T0, S2)

(b) [MULTI-VIEW DEPTH MAP]

TIME DOMAIN
(FRAME ORDER)

T0    T1    T2    T3    T4    T5 ⋯

S0    I    B    B    B    B    B    ⋯

S1    B    B    B    B    B    B    ⋯

S2    P    B    B    B    B    B    ⋯

S3    B    B    B    B    B    B    ⋯

SPATIAL
DOMAIN
(ARRANGEMENT
ORDER)

(iii)(vi)REFLECT MOTION DATA (T0, S2) ON VIDEO SIGNAL

## FIG.8

### (a) FIRST DATA FORMAT

FRAME

MACROBLOCK ╭PIXEL

THRESHOLD VALUE TH1

### (b) SECOND DATA FORMAT

FRAME

FRAME ╭MACROBLOCK

THRESHOLD VALUE TH1
THRESHOLD VALUE TH2

FIG.9

FIG.10

1274

| Gradient Range | 0 | 1 | 2-3 | 4-7 | 8-15 | 16-31 | 32-63 | 64-127 | 128-255 |
|---|---|---|---|---|---|---|---|---|---|
| D | 1 | 2 | 4 | 8 | 16 | 32 | 64 | 128 | 256 |

FIG.11

FIG.12

1214 (1414)

Converted MB → PROCESSING SELECTION UNIT 1290

flag1  flag2

Residual

Remainder

1270 GRADIENT IMAGE GENERATION UNIT

1272 FACTOR SELECTION UNIT

1274 LOOKUP TABLE

D

1298 INVERSE MODULO OPERATION UNIT

q'×D＋Remainder

INTRA/INTER

＋ 1292 ＋

1294 SYNTHESIS UNIT

Original MB

37

# FIG.13

FIG.14

EP 2 981 083 A1

FIG.15

200

PROCESSOR 204

MEMORY 206

INPUT UNIT 216

DISPLAY UNIT 218

222

PROJECTOR INTERFACE 208

COMMUNICATION INTERFACE 212

202

IMAGE DATA 214b

DECODING PROGRAM 214a

214

MULTI-VIEW IMAGES

3D DISPLAY DEVICE 300

**INTERNATIONAL SEARCH REPORT**

| International application No. |
|---|
| PCT/JP2014/056484 |

| A. CLASSIFICATION OF SUBJECT MATTER |
|---|
| *H04N19/102*(2014.01)i, *H04N19/597*(2014.01)i |

According to International Patent Classification (IPC) or to both national classification and IPC

| B. FIELDS SEARCHED |
|---|

Minimum documentation searched (classification system followed by classification symbols)
H04N19/00-19/98

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
IEEE Xplore, CiNii

| C. DOCUMENTS CONSIDERED TO BE RELEVANT |
|---|

| Category* | Citation of document, with indication, where appropriate, of the relevant passages | Relevant to claim No. |
|---|---|---|
| A | Mehrdad Panahpour Tehrani, Akio Ishikawa, Masahiro Kawakita, Naomi Inoue, Toshiaki Fujii, A hybrid representation for multi-view images, 3DTV-Conference: The True Vision - Capture, Transmission and Display of 3D Video (3DTV-CON), 2012.10.15, pp.1-4 | 1-7 |
| A | Mehrdad Panahpour Tehrani, Toshiaki Fujii, Masayuki Tanimoto, The Adaptive Distributed Source Coding of Multi-View Images in Camera Sensor Networks, IEICE transactions on fundamentals of electronics, communications and computer sciences, 2005.10.01, vol.E88-A, no. 10, pp.2835-2843 | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April, 2014 (23.04.14) | 13 May, 2014 (13.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/056484 |

C (Continuation).  DOCUMENTS CONSIDERED TO BE RELEVANT

| Category* | Citation of document, with indication, where appropriate, of the relevant passages | Relevant to claim No. |
| --- | --- | --- |
| A | Mehrdad Panahpour Tehrani, Akio Ishikawa, Masashiro Kawakita, Naomi Inoue, Toshiaki Fujii, A New Data Format for Multiview Video, IPSJ SIG Technical Report, 2013.02.22, vol. 2013-AVM-80, no.6, pp.1-5 | 1-7 |
| A | Yuta HIGUCHI, Mehrdad PANAHPOUR TEHRANI, Tomohiro ENDO, Toshiaki FUJII, Masayuki TANIMOTO, "N-View N-depth Coding for Free View Generation", IEICE Technical Report, 08 December 2011 (08.12.2011), vol.111, no.349, pages 1 to 6 | 1-7 |
| A | Hisayoshi FURIHATA, Tomohiro ENDO, Mehrdad PANAHPOUR TEHRANI, Toshiaki FUJII, Masayuki TANIMOTO, "Residual Prediction for Free Viewpoint Image Generation", IEICE Technical Report, 21 May 2009 (21.05.2009), vol.109, no. 63, pages 199 to 203 | 1-7 |
| A | JP 4-343576 A  (Matsushita Electric Industrial Co., Ltd.), 30 November 1992 (30.11.1992), entire text; all drawings & US 5392037 A | 1-7 |
| A | JP 2011-514024 A  (Telefonaktiebolaget LM Ericsson (publ)), 28 April 2011 (28.04.2011), paragraph [0070] & US 2010/0296745 A1    & EP 2081155 A1 & WO 2009/092455 A2    & CN 101919250 A & AT 524927 T          & TW 200935359 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **THOMAS WIEGAND ; GARY J. SULLIVAN ; GISLE BJONTEGAARD ; AJAY LUTHRA.** Overview of the H.264/AVC Video Coding Standard. *IEEE Transactions on Circuits and Systems for Video Technology,* July 2003, vol. 13 (7), 560-576

- **P. MERKLE ; K. MULLER ; A. SMOLIC ; T. WIEGAND.** Efficient Compression of Multi-view Video Exploiting inter-view dependencies based on H.264/MPEG4-AVC. *Proc. ICME,* 2006, 1717-1720
- **S. YEA ; A. VETRO.** View synthesis prediction for multiview video coding. *Signal Processing: Image Communication,* 2009, vol. 24, 89-100